(19) **Europäisches Patentamt / European Patent Office / Office européen des brevets**

(11) **EP 4 617 626 A1**

(12) **EUROPEAN PATENT APPLICATION**
published in accordance with Art. 153(4) EPC

(43) Date of publication:
**17.09.2025 Bulletin 2025/38**

(21) Application number: **23917148.1**

(22) Date of filing: **06.11.2023**

(51) International Patent Classification (IPC):
**G01C 21/34** (2006.01)    **G01C 21/36** (2006.01)

(52) Cooperative Patent Classification (CPC):
**G01C 21/3676; G01C 21/3682;** G01C 21/3415;
G01C 21/3469

(86) International application number:
**PCT/CN2023/130008**

(87) International publication number:
**WO 2024/152680 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.01.2023 CN 202310119028**

(71) Applicant: **Tencent Technology (Shenzhen) Company Limited**
**Shenzhen, Guangdong 518057 (CN)**

(72) Inventors:
• **ZHANG, Long**
  **Shenzhen, Guangdong 518057 (CN)**
• **LI, Weizheng**
  **Shenzhen, Guangdong 518057 (CN)**
• **ZHAO, Hongchao**
  **Shenzhen, Guangdong 518057 (CN)**
• **HUANG, Wei**
  **Shenzhen, Guangdong 518057 (CN)**
• **LV, Chunhua**
  **Shenzhen, Guangdong 518057 (CN)**

(74) Representative: **EP&C**
**P.O. Box 3241**
**2280 GE Rijswijk (NL)**

(54) **NAVIGATION PATH DISPLAY METHOD AND APPARATUS, COMPUTER DEVICE AND STORAGE MEDIUM**

(57)    A navigation path display method and apparatus (1600), a computer device, a storage medium, and a computer program product. The navigation path display method comprises: displaying a starting point marker and a destination marker for navigation planning of a vehicle, wherein the starting point marker is a marker representing a starting point of the navigation planning, and the destination marker is a marker representing a destination of the navigation planning (S202); displaying at least one navigation path planned from the starting point marker to the destination marker (S204); and for a target navigation path in the at least one navigation path, displaying an energy replenishment point marker on the target navigation path, wherein the energy replenishment point marker is a marker representing a via-point on the target navigation path, the via-point represented by the energy replenishment point marker is a vehicle driving energy replenishment point, and the target navigation path is one of the at least one navigation path (S206).

FIG. 2

**Description**

RELATED APPLICATION

This application claims priority to Chinese Patent Application No. 2023101190286, filed on January 18, 2023 and entitled "METHOD AND APPARATUS FOR DISPLAYING NAVIGATION ROUTE, COMPUTER DEVICE, AND STORAGE MEDIUM".

FIELD OF THE TECHNOLOGY

This application relates to the field of computer technologies, and in particular, to a method and apparatus for controlling displaying of a navigation route, a computer device, and a storage medium.

BACKGROUND OF THE DISCLOSURE

With the development of society, road traffic has become increasingly intricate. Therefore, when traveling, people often need to complete route planning using electronic map applications. Route planning is generally defined as a problem of finding one or more routes from a specified start point to a specified end point.

Currently, when route planning is needed, a start point and an end point may be inputted into an electronic map application, so that the electronic map application can display a navigation route including a start point label and an end point label. However, only the start point label and the end point label are displayed, resulting in low diversity of label display.

SUMMARY

Embodiments of this application provide a method and apparatus for controlling displaying of a navigation route, a computer device, a storage medium, and a computer program product.

A method for controlling displaying of a navigation route is provided, including:

displaying a navigation route from a start point label to an end point label; and

displaying an energy replenishment location label on the navigation route, the energy replenishment location label being a waypoint representing a driving energy replenishment location for the vehicle.

An apparatus for controlling displaying of a navigation route is provided, including:
a route display module, configured to display a navigation route from a start point label to an end point label; and display an energy replenishment location label on the navigation route, the energy replenishment location label being a waypoint representing a driving energy replenishment location for the vehicle.

A computer device is provided, including a memory and a processor, the memory having a computer program stored therein, and the processor, when executing the computer program, implementing the operations of any method for displaying a navigation route provided in the embodiments of this application.

A computer-readable storage medium, having a computer program stored therein, the computer program, when executed by a processor, implementing the operations of any method for displaying a navigation route provided in the embodiments of this application.

A computer program product is provided, including a computer program, the computer program, when executed by a processor, implementing the operations of any method for displaying a navigation route provided in the embodiments of this application.

Details of one or more embodiments of this application are provided in the accompanying drawings and descriptions below. Other features and advantages of this application will become apparent from the specification, the accompanying drawings, and the claims.

BRIEF DESCRIPTION OF THE DRAWINGS

To describe the technical solutions in the embodiments of this application or the related art more clearly, the following briefly describes the accompanying drawings required for describing the embodiments or the related art. Apparently, the accompanying drawings in the following description show merely embodiments of this application, and a person of ordinary skill in the art may still derive other drawings from the disclosed accompanying drawings without creative efforts.

FIG. 1 is a diagram of an application environment of a method for displaying a navigation route according to an embodiment.

FIG. 2 is a schematic flowchart of a method for controlling displaying of a navigation route according to an embodiment.

FIG. 3 is a schematic diagram of display of a start point and an end point according to an embodiment.

FIG. 4 is a schematic diagram of display of location labels according to an embodiment.

FIG. 5 is a schematic diagram of a waypoint according to an embodiment.

FIG. 6 is a schematic diagram of an initial page according to an embodiment.

FIG. 7 is a schematic diagram of display of vehicle information according to another embodiment.

FIG. 8 is a schematic diagram of display of a navigation route according to an embodiment.

FIG. 9 is a schematic diagram of switching a navigation route according to an embodiment.

FIG. 10 is a schematic diagram of display of label information according to an embodiment.

FIG. 11 is a schematic diagram of determining candidate driving energy replenishment locations according to an embodiment.

FIG. 12 is a schematic diagram of an energy consumption curve according to an embodiment.

FIG. 13 is a schematic diagram of prompting a risk of being unreachable according to an embodiment.

FIG. 14 is a schematic flowchart of a method for controlling displaying of a navigation route according to a specific embodiment.

FIG. 15 is a schematic diagram of a framework of displaying a navigation route according to an embodiment.

FIG. 16 is a structural block diagram of an apparatus for controlling displaying of a navigation route according to an embodiment.

FIG. 17 is a structural block diagram of an apparatus for controlling displaying of a navigation route according to another embodiment.

FIG. 18 is a diagram of an internal structure of a computer device according to an embodiment.

DESCRIPTION OF EMBODIMENTS

To make the objectives, technical solutions, and advantages of this application clearer and more understandable, this application is further described in detail below with reference to accompanying drawings and embodiments. The specific embodiments described herein are only used for explaining this application, and are not used for limiting this application.

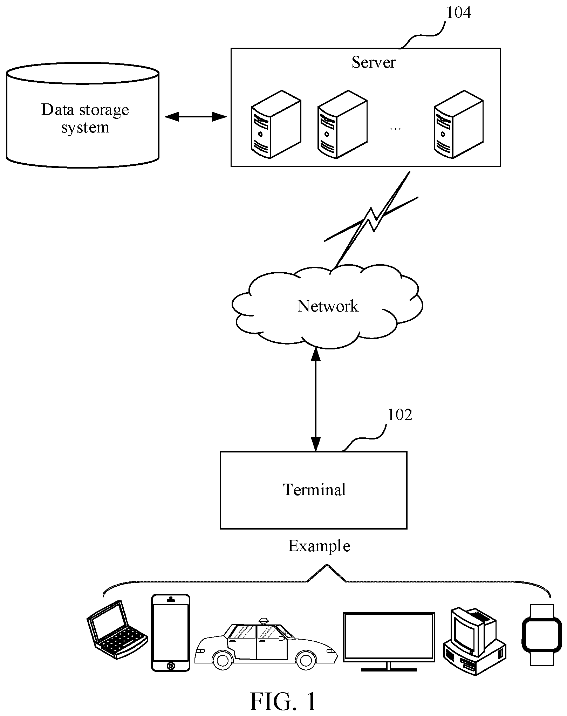

A method for controlling displaying of a navigation route provided in the embodiments of this application may be applied to an application environment shown in FIG. 1. A terminal 102 communicates with a server 104 through a network. A data storage system may store data that the server 104 needs to process. The data storage system may be integrated on the server 104 or arranged on the cloud or another server. The terminal 102 may independently perform the method for controlling displaying of a navigation route provided in the embodiments of this application, or the terminal 102 and the server 104 may be configured in cooperation to perform the method for controlling displaying of a navigation route provided in the embodiments of this application. Descriptions are provided by using an example in which the terminal 102 and the server 104 are configured in cooperation to perform the method for controlling displaying of a navigation route provided in the embodiments of this application. An electronic map application may be run in the terminal 102, and the server 104 may be a backend server of the electronic map application. A user may input a start point and an end point of a to-be-planned navigation route through the electronic map application in the terminal 102. Therefore, the terminal 102 may transmit the start point and the end point inputted by the user to the server 104, so that the server 104 performs route planning based on the received start point and end point, to generate at least one navigation route, and transmits route data of the generated at least one navigation route to the terminal 102. The terminal 102 displays the at least one navigation route based on the received route data, and displays, on a target navigation route in the at least one navigation route, an energy replenishment location label used as a waypoint of the target navigation route. The terminal 102 may be, but not limited to, various in-vehicle terminals, desktop computers, notebook computers, smartphones, tablet computers, Internet of Things devices, and portable wearable devices. The Internet of Things device may be a smart speaker, a smart television, a smart air conditioner, a smart in-vehicle device, or the like. The portable wearable device may be a smart watch, a smart band, a head-mounted device, or the like. The server 104 may be implemented by using an independent server or a server cluster that includes a plurality of servers.

This application relates to an intelligent traffic system (ITS). For example, more accurate navigation can be implemented through the method for controlling displaying of a navigation route according to this application. The ITS is also referred to as an intelligent transportation system and effectively and comprehensively applies advanced technologies (such as information technologies, computer technologies, data communication technologies, sensor technologies, electronic control technologies, automatic control theories, operations research, and artificial intelligence) to transportation, service control, and vehicle manufacturing, to strengthen connections among vehicles, roads, and users, thereby forming a comprehensive transportation system that ensures safety, improves efficiency, improves the environment, and saves energy.

The "first", the "second", and similar terms used in this application do not indicate any order, quantity, or significance, but are used to only distinguish different components. Unless the context clearly indicates otherwise, singular forms, such as "a", "an", or "the", do not indicate a quantity limitation, but indicate the presence of at least one. A quantity indicated by "a plurality of", "multiple", or the like mentioned in the embodiments of this application is a quantity of "at least two". For example, "a plurality of" is "at least two", and "multiple" is also "at least two".

In some embodiments of this application, a method for controlling displaying of a navigation route is provided, which includes: displaying a navigation route from a start point label to an end point label; and displaying an energy replenishment location label on the navigation route, the energy replenishment location label representing a driving energy replenishment location for the vehicle, wherein the driving energy replenishment location for the vehicle is a waypoint of the navigation route.

In some embodiment of the application, the start point label represents a start point of navigation planning for generating the navigation route, and the end point label represents an end point of the navigation planning. In practice, at least one navigation route may be generated by the navigation planning with the start point and the end point, and the navigation as displayed may be a target navigation route selected from the at least one navigation route according to some conditions; for example, the target navigation route may be a recommended route in the at least one navigation route.

It can be understood that the energy replenishment location label represent a waypoint of the navigation route, and the waypoint is also a driving energy replenishment location for the vehicle on the navigation route.

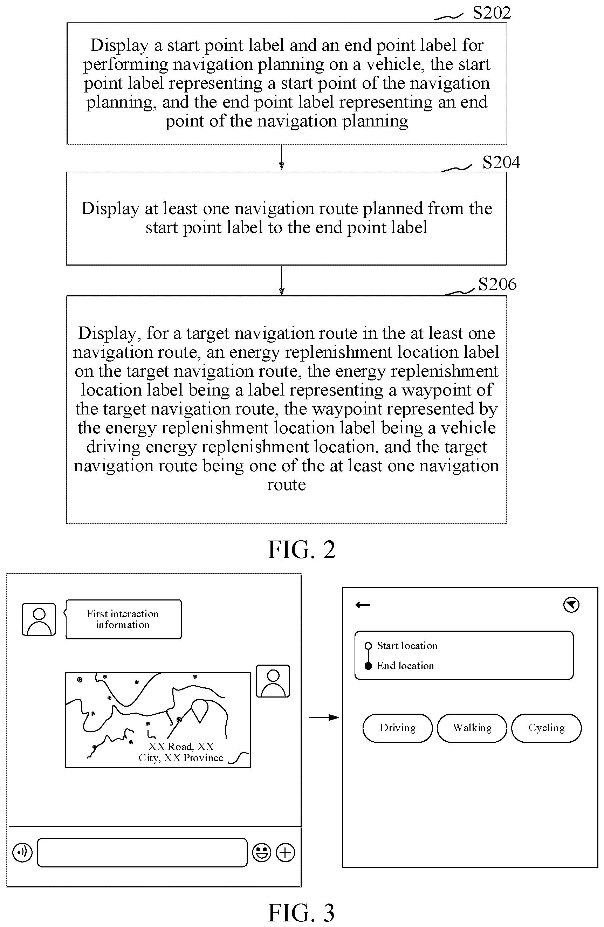

In some embodiments, as shown in FIG. 2, a method for controlling displaying of a navigation route is provided. Descriptions are provided using an example in which the method is applied to the terminal in FIG. 1.

In some embodiments, the method may include Step 202: Display a start point label and an end point label for performing navigation planning on a vehicle, the start point label being a label representing a start point of the navigation planning, and the end point label being a label representing an end point of the navigation planning.

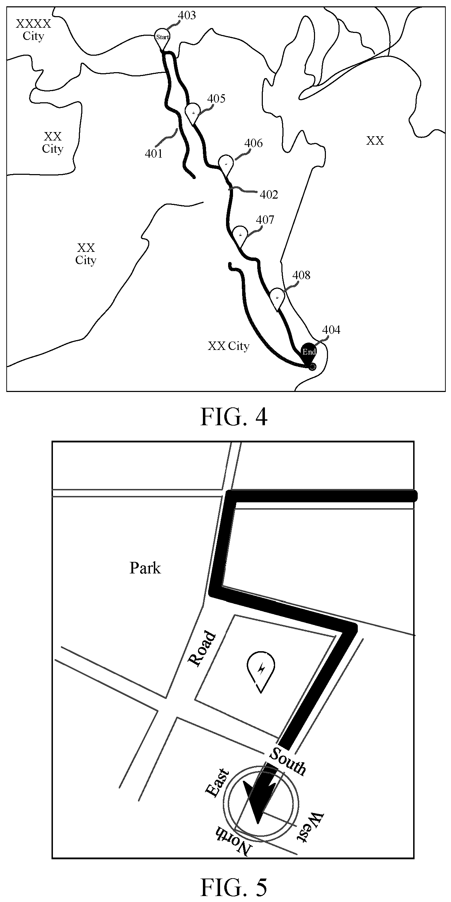

In embodiments, when navigation is needed, the terminal may obtain a start point and an end point for performing navigation planning on the vehicle, and display a start point label corresponding to the start point and an end point label corresponding to the end point. For example, a target vehicle is used below as an example for description. The target vehicle may be any vehicle using this application for navigation. The terminal may be specifically an in-vehicle terminal of the target vehicle, and have an electronic map application run therein. When navigation is needed, an owner of the target vehicle may input a start point and an end point in the electronic map application, so that the electronic map application displays a start point label corresponding to the start point inputted by the owner and an end point label corresponding to the end point inputted by the owner. Alternatively, the owner of the target vehicle may input only the end point. A positioning application is deployed in the in-vehicle terminal, a current location of the target vehicle can be obtained through the positioning application, and the current location of the target vehicle is used as the start point. The start point label corresponding to the start point and the end point label corresponding to the end point inputted by the owner are displayed in the electronic map application. The label may be specifically an icon. The start point label is an icon representing a start point of the navigation planning, and the end point label is an icon representing an end point of the navigation planning. For example, in FIG. 4, 403 is the start point label, and 404 is the end point label.

In some of the embodiments, before displaying the start point label and the end point label, the terminal may further display a start point corresponding to the start point label and an end point corresponding to the end point label. Referring to FIG. 3, an instant messaging application may be run in the terminal, and the instant messaging application may receive a positioning card sent by a friend. The terminal obtains, in response to a trigger operation performed by the owner on the positioning card, a location to which the positioning card points, and displays the location to which the positioning card points as the end point and the current position of the target vehicle as the start point in the electronic map application. FIG. 3 is a schematic diagram of display of a start point and an end point according to an embodiment.

In some of the embodiments, when needing to drive the target vehicle for a long distance, the owner may trigger the terminal to display a home page of the electronic map application, and input a start point and an end point in the home page of the electronic map application through voice input, so that the terminal can display a corresponding start point label and a corresponding end point label.

In some embodiments, the method may further include Step 204: Display at least one navigation route planned from the start point label to the end point label.

In embodiments, when displaying the start point label and the end point label, the terminal may further display at least one navigation route planned from the start point label to the end point label. For example, the terminal may display, in a navigation map, at least one navigation route pointing from the start point label to the end point label.

In some embodiments, the method may include Step 206: Display, for a target navigation route in the at least one navigation route, an energy replenishment location label on the target navigation route, the energy replenishment location label being a label representing a waypoint of the target navigation route, the waypoint represented by the energy replenishment location label being a driving energy replenishment location of the vehicle, and the target navigation route being one of the at least one navigation route.

In embodiments, for the target navigation route in the at least one navigation route, the start point label, the end point label, and the energy replenishment location label may be displayed on the target navigation route. An energy replenishment location to which the energy replenishment location label points is a waypoint of the target navigation route. That is, the energy replenishment location label may be/indicate a waypoint represent a driving energy replenishment location for the vehicle. The energy replenishment location is a location for replenishing driving energy of the target vehicle. The driving energy is energy for driving the vehicle to travel. For example, the driving energy may be specifically gasoline, electric energy, or the like. The navigation route is a route from the start point to the end point. For example, referring to FIG. 4, 401 and 402 in FIG. 4 are navigation routes.

In some of the embodiments, the energy replenishment location is a location for replenishing driving energy of the target vehicle, and is also a waypoint. The waypoint of the navigation route is a location to be passed during traveling along the navigation route. Correspondingly, the energy replenishment location label is a label displayed in an electronic map to represent an energy replenishment location. Therefore, in this application, the energy replenishment location label may be configured to represent a waypoint, and may be further configured to represent an energy replenishment location.

In some of the embodiments, the target navigation route may be a recommended navigation route in the at least one navigation route, a navigation route selected by the owner from the at least one navigation route, or any navigation route in the at least one navigation route.

In some of the embodiments, referring to FIG. 4, the terminal may display navigation routes 401 and 402 in a navigation map, and display, on a target navigation route, a start point label 403, an end point label 404, and energy replenishment location labels 405 to 408 located between the start point label and the end point label. FIG. 4 is a schematic diagram of display of location labels according to an embodiment.

In some of the embodiments, for an energy replenishment location label displayed on the target navigation route, a location to which the energy replenishment location label points is a waypoint of the target navigation route. For example, referring to FIG. 5, the target navigation route will pass a location to which an energy replenishment location label points. FIG. 5 is a schematic diagram of a waypoint according to an embodiment.

In some of the embodiments, while the at least one navigation route is displayed, attribute information of each navigation route may be further displayed. The attribute information may include a total duration, total kilometers, a quantity of traffic lights, and the like. For example, the terminal may display attribute information corresponding to each navigation route. Moreover, the target navigation route may be a recommended navigation route determined based on comprehensive attribute information. For example, the target navigation route may be a navigation route with a shortest duration in the at least one navigation route, so that the terminal may display a location label sequence on the target navigation route, to prompt, based on the location label sequence, the owner of locations that the target navigation route will pass.

In some of the embodiments, each of the at least one navigation route may be referred to as a target navigation route, so that a corresponding location label sequence is displayed on each navigation route displayed. Energy replenishment location labels displayed on all navigation routes may not be completely the same. Alternatively, first n recommended navigation routes in the at least one navigation route may be referred to as target navigation routes, n being a preset quantity, and corresponding energy replenishment location labels are displayed on the target navigation routes.

In some of the embodiments, the target vehicle has a remaining driving energy amount and a storage capacity. For the target navigation route in the at least one navigation route, a location label sequence from the start point label to the end point label is displayed on the target navigation route. The location label sequence includes an energy replenishment location label located between the start point label and the end point label. In the location label sequence, an estimated energy consumption amount of a section between the first two location labels is not greater than the remaining driving energy amount, and an estimated energy consumption amount of a section between any adjacent energy replenishment location labels is not greater than the storage capacity. Because the estimated energy consumption amount of the section between the first two location labels is not greater than the remaining driving energy amount, the owner can drive the target vehicle and successfully arrive at a location represented by the second location label based on the remaining driving energy amount in the target vehicle. Because the estimated energy consumption amount of the section between any adjacent energy replenishment location labels is not greater than the storage capacity, after the target vehicle is replenished with driving energy at an energy replenishment location, the owner can drive, based on driving energy possessed by the target vehicle, the target vehicle to successfully arrive at a neighboring energy replenishment location adjacent to the current energy replenishment location from the current energy replenishment location. In this way, the target vehicle is driven to successfully arrive at the end point from the start point of the target navigation route.

The location label sequence includes a plurality of location labels. The location label is a label for representing a location. The location label sequence includes at least one of a location label representing a start point, a location label representing an end point, and a location label representing a driving energy replenishment location. For the convenience of description, in the following, the location label representing the start point is referred to as a start point label, the location label of the end point is referred to as an end point label, and the location label of the driving energy replenishment location is referred to as an energy replenishment location label. For example, referring to FIG. 4, a location label sequence may be displayed in the electronic map. The location label sequence includes a start point label 403, an end point label 404, and energy replenishment location labels 405 to 408.

The adjacent energy replenishment location labels are adjacent energy replenishment location labels in a plurality of location labels in the location label sequence. As shown in FIG. 4, because the location label sequence is displayed on the navigation route, there is a front-back positional relationship between location labels. For example, the adjacent energy replenishment location labels may be 405 and 406 in FIG. 4.

The estimated energy consumption amount is an estimated amount of energy that the target vehicle needs to consume when traveling from a location to which one location label in adjacent location labels points to a location to which the other location label points. For example, referring to FIG. 4, the estimated energy consumption amount may be an amount of energy that the target vehicle needs to consume after traveling from a location to which 405 points to a location to which 406 points. When the energy is electric energy, the estimated energy consumption amount is an amount of power that the target vehicle needs to consume after traveling from the location to which 405 points to the location to which 406 points.

The energy storage space is a storage space on the vehicle for storing driving energy. For example, the energy storage space may be specifically a battery, a fuel tank, or the like. The remaining driving energy amount is a driving energy amount remaining in the energy storage space of the target vehicle. The storage capacity is a total amount of driving energy that can be released from the energy storage space of the target vehicle. When the storage capacity space is a battery, the remaining driving energy amount is specifically a remaining power amount, and the storage capacity is specifically a battery capacity. When the storage capacity space is a fuel tank, the remaining driving energy amount is specifically a remaining fuel amount, and the storage capacity is specifically a fuel tank capacity.

In some of the embodiments, the energy replenishment location label in the displayed location label sequence may represent a waypoint of the target navigation route. For example, referring to FIG. 4, an energy replenishment location label 405 may represent that when traveling along the target navigation route, the target vehicle will pass a location to which the energy replenishment location label 405 points.

For a target navigation route in the at least one navigation route, a location label sequence from a start point to an end point may be displayed on the target navigation route. When the location label sequence includes more than two location labels, the location label sequence may include the start point label, the end point label, and an energy replenishment location label. When the location label sequence includes two location labels, the two location labels included in the location label sequence may be the start point label and the end point label. When the location label sequence includes more than two location labels, an estimated energy consumption amount of a section between first two location labels is not greater than the remaining driving energy amount. For example, referring to FIG. 4, the first two location labels may be a start point label 403 and an energy replenishment location label 404, and the estimated energy consumption amount of the section between the start point label 403 and the energy replenishment location label 404 is not greater than the remaining driving energy amount in the energy storage space. Because the estimated energy consumption amount of the section between the first two location labels is not greater than the remaining driving energy amount, a location to which a latter location label in the first two location labels points is reachable, and the target vehicle can travel from the start point to the location to which the latter location label points based on the remaining driving energy amount. For example, the target vehicle can travel, based on a current remaining power amount, from the start point to a charging station to which the energy replenishment location label 403 points, to perform a first round of power replenishment at the charging station to which the energy replenishment location label 404 points, to perform subsequent traveling based on replenished power.

When the location label sequence includes more than two location labels, an estimated energy consumption amount of a section between any adjacent energy replenishment location labels in the location label sequence is not greater than the storage capacity. For example, referring to FIG. 4, when the adjacent energy replenishment location labels may be an energy replenishment location label 405 and an energy replenishment location label 406, the target vehicle may be first charged at a charging station to which the energy replenishment location label 405 points. In this case, a maximum charging amount may be the battery capacity, so that the battery capacity can support the target vehicle to travel from the charging station to which the energy replenishment location label 405 points to a charging station to which the energy replenishment location label 406 points. Because an estimated energy consumption amount of any adjacent energy replenishment location labels is not greater than the storage capacity, the target vehicle can travel, based on energy replenished at a location to which a former energy replenishment location label in the adjacent energy replenishment location labels points, to a location to which a latter energy replenishment location label in the adjacent energy replenishment location labels points. Therefore, the location to which the latter target energy replenishment location label in the adjacent energy replenishment location labels points is reachable. Because a location to which an energy replenishment location label displayed on the target navigation route points is reachable, the displayed energy replenishment location label is more accurate, thereby greatly improving the user experience and facilitating a user in planning vehicle driving energy based on the displayed energy replenishment location label.

In the foregoing method for controlling displaying of a navigation route, by displaying the start point label and the end point label, at least one navigation route planned from the start point label to the end point label can be displayed. By displaying at least one navigation route, on a target navigation route in the at least one navigation route, an energy replenishment location label representing a waypoint of the target navigation route can be displayed. Because the start point label, the end point label, and the energy replenishment location label are displayed on the target navigation route, diversity of displayed location labels is improved. In addition, because the energy replenishment location label is displayed on the target navigation route as a waypoint, the owner can perform driving energy replenishment during traveling along the target navigation route, and does not need to detour to another energy replenishment location for energy replenishment, thereby reducing energy consumed by detouring.

In some of the embodiments, the displaying a start point label and an end point label for performing navigation planning on a vehicle includes: displaying a navigation map and a navigation trigger control in response to a navigation map display operation; and displaying the start point label and the end point label in the navigation map in response to a trigger operation on the navigation trigger control.

In embodiments, the terminal may display a navigation map and a navigation trigger control in response to a navigation map display operation. For example, when the owner starts the electronic map application, the terminal may display the navigation map and the navigation trigger control in response to the operation of starting the electronic map. The operation of starting the electronic map is the navigation map display operation. The navigation trigger control is a control for triggering navigation. For example, when the owner clicks/taps the navigation trigger control, the terminal may display a navigation route.

In the foregoing embodiment, the start point label and the end point label are displayed in the navigation map, so that the owner can intuitively view the start point and the end point of the navigation planning, thereby greatly improving the efficiency of viewing the start point and the end point of the navigation planning.

In some of the embodiments, the displaying a navigation map in response to a navigation map display operation includes: displaying an initial page in response to the navigation map display operation, a start point input box, an end point input box, the navigation trigger control, and the navigation map being displayed in the initial page; and in response to input operations on the start point input box and the end point input box, displaying the start point in the start point input box, and displaying the end point in the end point input box. The displaying the start point label and the end point label in the navigation map in response to a trigger operation on the navigation trigger control includes: displaying, in response to the trigger operation on the navigation trigger control, the start point label corresponding to the start point and the end point label corresponding to the end point in the navigation map.

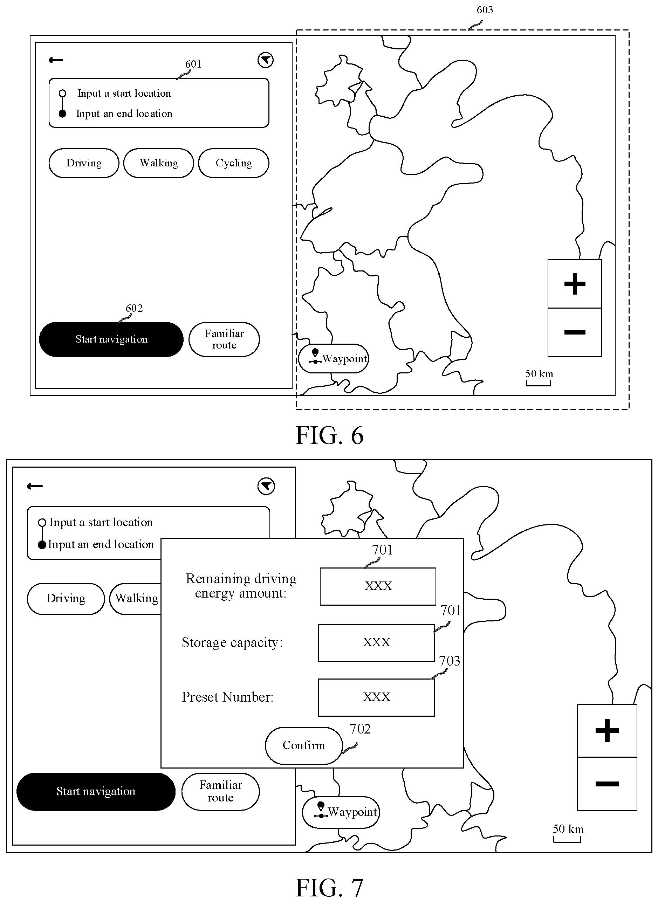

In embodiments, the terminal may display an initial page in response to the navigation map display operation, a start point input box, an end point input box, the navigation trigger control, and the navigation map being displayed in the initial page. For example, referring to FIG. 6, the terminal may display a start point input box and end point input box 601, a navigation trigger control 602, and the navigation map 603 in the initial page. Further, the owner may input the start point of the navigation planning in the start point input box, input the end point of the navigation planning in the end point input box, and click/tap the navigation trigger control, to cause the terminal to display the start point label corresponding to the inputted start point and the end point label corresponding to the end point in the navigation map, that is, display the start point label representing the start point and the end point label representing the end point. In this case, the terminal may further display at least one navigation route planned from the start point label to the end point label. FIG. 6 is a schematic diagram of an initial page according to an embodiment.

In the foregoing embodiment, the start point input box and the end point input box are displayed, so that the owner can input the start point in the start point input box and the end point in the end point input box based on an actual navigation need of the owner, to enable the start point label and the end point label generated based on the inputted start point and end point to also meet the actual navigation need of the owner. Because the start point label and the end point label meet the actual navigation need, the generated start point label and end point label are accurate.

In some of the embodiments, the displaying at least one navigation route planned from the start point label to the end point label includes: displaying vehicle information of the vehicle, the vehicle information including a remaining driving energy amount and a storage capacity of the vehicle, the storage capacity being a capacity of an energy storage space used for storing driving energy of the vehicle; and displaying, in response to a confirmation operation on the vehicle information, the at least one navigation route from the start point label to the end point label.

In embodiments, because a location to which the energy replenishment location label points displayed on the target navigation route is reachable, at least one navigation route may be planned based on the remaining driving energy amount and the storage capacity of the target vehicle. Therefore, before the at least one navigation route is displayed, the remaining driving energy amount and the storage capacity of the target vehicle may be confirmed, so that the at least one navigation route is subsequently determined based on the confirmed remaining driving energy amount and storage capacity. When information confirmation is needed, the terminal may display the vehicle information of the target vehicle. The vehicle information includes the remaining driving energy amount and the storage capacity of the target vehicle. The terminal generates, in response to a confirmation operation performed by the owner on the vehicle information, at least one navigation route based on the confirmed vehicle information, and displays the generated at least one navigation route.

In some of the embodiments, the terminal may directly obtain the remaining driving energy amount and the storage capacity of the target vehicle from an information obtaining interface of the target vehicle, or the owner may input the remaining driving energy amount and the storage capacity of the target vehicle, so that the terminal can display the remaining driving energy amount and the storage capacity.

In the foregoing embodiments, after determining that the remaining driving energy amount and the storage capacity are accurate, the at least one navigation route generated based on the remaining driving energy amount and the storage capacity is displayed, so that the displayed navigation route is accurate.

In some of the embodiments, the displaying vehicle information of the vehicle includes: displaying an information input page, and displaying, in response to an input operation on the information input page, the vehicle information of the vehicle.

In embodiments, the terminal may display an information input page. Referring to FIG. 7, a vehicle information input box 701 and a confirm control 702 are displayed in the information input page. The owner may input vehicle information in the vehicle information input box 701, and trigger confirmation of the vehicle information through a click/tap operation on the confirm control 702. The operation of inputting the vehicle information in the vehicle information input box is the input operation on the information input page. FIG. 7 is a schematic diagram of display of vehicle information according to another embodiment.

In the foregoing embodiment, the information input page is displayed, which can facilitate the owner in inputting the vehicle information, thereby improving the efficiency of inputting the vehicle information.

In some of the embodiments, the target navigation route is a recommended navigation route or a switched-to navigation route to which a navigation route switching operation points. The displaying at least one navigation route planned from the start point label to the end point label includes: displaying at least one navigation route from the start point label to the end point label, highlighting the recommended navigation route in the at least one navigation route, and displaying the energy replenishment location label on the recommended navigation route; and/or in response to the navigation route switching operation, switching from highlighting the recommended navigation route to highlighting the switched-to navigation route, and switching from displaying the energy replenishment location label on the recommended navigation route to displaying an energy replenishment location label on the switched-to navigation route.

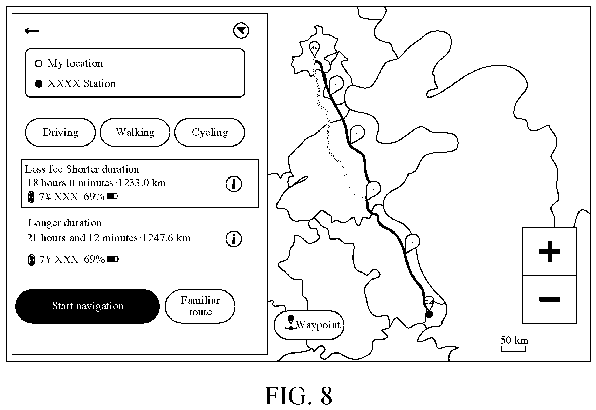

In embodiments, when the at least one navigation route is generated, the terminal may display the at least one navigation route. The terminal may highlight a recommended navigation route in the at least one navigation route, and display, on the recommended navigation route when the recommended navigation route is highlighted, a location label sequence including an energy replenishment location label. In this case, the target navigation route is the recommended navigation route. For example, referring to FIG. 8, the terminal may highlight a navigation route with a shorter duration, and display a location label sequence of the navigation route with the shorter duration. The recommended navigation route is a navigation route recommended by the terminal.

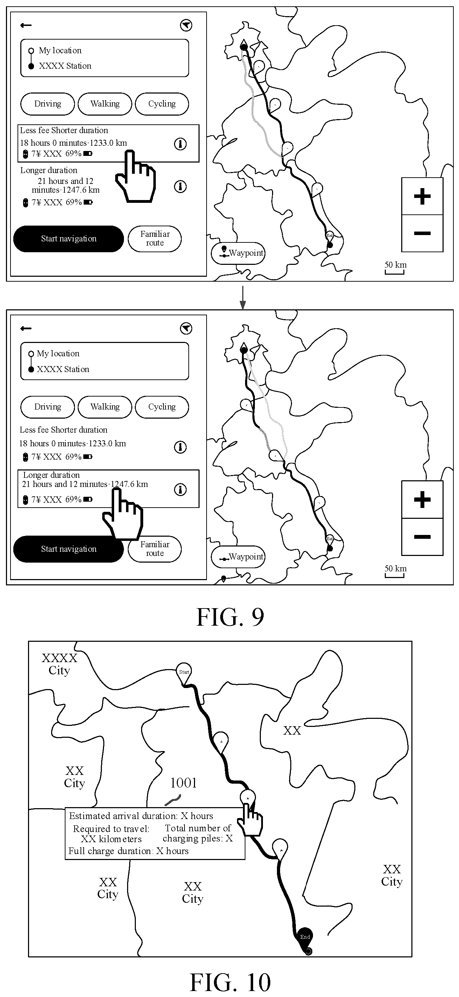

Further, the owner may switch the highlighted navigation route. The owner may perform navigation route switching by clicking/tapping attribute information of a to-be-switched-to navigation route. Therefore, the terminal switches, in response to a switching operation performed by the owner, from highlighting the recommended navigation route to highlighting a switched-to navigation route to which the navigation route switching operation points, and displays a location label sequence on the switched-to navigation route. In this case, the target navigation route is changed from the recommended navigation route to the switched-to navigation route. For example, referring to FIG. 9, the terminal may switch to displaying a location label sequence on a navigation route with a longer duration. The switched-to navigation route is a navigation route to which the navigation route switching operation points. For example, when the owner triggers the navigation route switching operation and expects to switch from highlighting a navigation route A to highlighting a navigation route B, the navigation route B is the navigation route to which the navigation route switching operation points. FIG. 8 is a schematic diagram of display of a navigation route according to an embodiment. FIG. 9 is a schematic diagram of switching a navigation route according to an embodiment.

In the foregoing embodiments, the target navigation route is selectively highlighted, and the target navigation route may be switched according to the navigation route switching operation performed by the owner. In this way, the flexibility of displaying the navigation route is greatly improved, so that the highlighted target navigation route may change with the need of the owner.

In some of the embodiments, the energy replenishment location label displayed on the recommended navigation route and the energy replenishment location label displayed on the switched-to navigation route are not completely the same.

The energy replenishment location label is a label of a driving energy replenishment location, and the driving energy replenishment location is a location for driving energy replenishment, for example, a gas station or a charging station.

In embodiments, when the location label sequence corresponding to the recommended navigation route includes more than two location labels, it may be considered that the location label sequence further includes at least one energy replenishment location label in addition to the start point label and the end point label. In this case, if the target vehicle travels based on the recommended navigation route, and a remaining driving energy amount of the target vehicle is not sufficient to support traveling to the end point, energy replenishment needs to be performed during the traveling to the end point. Correspondingly, when the location label sequence corresponding to the switched-to navigation route also includes more than two location labels, the location label sequence also includes at least one energy replenishment location label. In addition, the energy replenishment location label in the location label sequence corresponding to the recommended navigation route and the energy replenishment location label in the location label sequence corresponding to the switched-to navigation route are not completely consistent. In other words, each of the at least one navigation route has its own corresponding location label sequence, and energy replenishment location labels in the respective corresponding location label sequences are not completely the same. Therefore, when traveling from the start point to the end point along different navigation routes, the owner may pass different driving energy replenishment locations. In this way, the owner may select, as needed by the owner, one navigation route from the at least one navigation route for navigation.

In the foregoing embodiments, because energy replenishment location labels in location label sequences corresponding to different navigation routes may not be the same, diversity of driving energy replenishment locations is improved, so that the owner can select, based on the need of the owner, a navigation route with a more appropriate energy replenishment location label for navigation, thereby improving the flexibility of navigation.

In some of the embodiments, the method further includes: displaying label information corresponding to each energy replenishment location label, the label information including at least one of a time spent for driving energy of the vehicle to be replenished to a preset target amount, a time spent for the vehicle to travel to the energy replenishment location to which the corresponding energy replenishment location label points, and a quantity of energy replenishment devices at the energy replenishment location to which the corresponding energy replenishment location label points.

In embodiments, while the energy replenishment location label is displayed on the target navigation route, label information corresponding to each energy replenishment location label may be further displayed. The label information includes at least one of a time to be spent for driving energy of the target vehicle to be replenished to a preset target amount, a time spent for the target vehicle to travel to the energy replenishment location to which the corresponding energy replenishment location label points, and a quantity of energy replenishment devices at the energy replenishment location to which the corresponding energy replenishment location label points. The time to be spent for driving energy of the target vehicle to be replenished to a preset target amount is a time to be spent for replenishing the driving energy to a target amount when the target vehicle performs energy replenishment at a location to which a corresponding energy replenishment location label points. The target amount may be a preset amount. For example, the target amount may be a driving energy storage capacity.

In some embodiments, referring to FIG. 10, while the energy replenishment location label on the target navigation route is clicked/tapped, label information 1001 may be displayed at an empty position corresponding to the energy replenishment location label. FIG. 10 is a schematic diagram of display of label information according to some embodiments.

In the foregoing embodiments, by displaying the label information, the owner is enabled to learn of more information, which helps the owner to select, based on the displayed label information, a more appropriate navigation route from the at least one navigation route. In this way, the user experience is improved, and the accuracy of a navigation route finally configured for navigation is improved.

In some of the embodiments, before the displaying at least one navigation route planned from the start point label to the end point label, the foregoing method further includes a navigation route generation operation. The navigation route generation operation includes: obtaining road topology data, and generating at least one initial route from the start point label to the end point label based on the road topology data; obtaining driving energy replenishment location data; and generating a navigation route corresponding to a respective one of the at least one initial route based on the driving energy replenishment location data.

In embodiments, when the navigation route needs to be generated, the terminal may obtain road topology data, perform initial route planning based on the road topology data, and generate at least one initial route from the start point to the end point without considering a driving energy replenishment location. For example, a plurality of routes from the start point to the end point may be generated based on the road topology data, the plurality of routes are scored with reference to a preference of the owner and multi-dimensional route features of each route, to obtain respective route scores of the plurality of routes, and the plurality of routes are sorted in descending order of the route scores to obtain a route sequence. The terminal extracts first n routes in the route sequence, n being a preset quantity, and uses each extracted route as an initial route. The multi-dimensional route features are features reflecting a plurality of dimensions of road attributes. For example, the multi-dimensional route features may include a duration, a route length, a quantity of traffic lights passed, and the like. The terminal may sort a plurality of routes through a pre-trained sorting-recommendation model, and extract a preset quantity of initial routes from the route sequence. The sorting-recommendation model is a machine learning model that has sorting and recommendation capabilities through sample learning.

Further, for each of the at least one initial route, the terminal may generate a navigation route corresponding to the initial route based on driving energy replenishment location data obtained in advance.

In the foregoing embodiments, because the plurality of routes are scored based on information such as a duration, a route length, and a quantity of traffic lights passed, a route with a higher score may have a shorter route length, a shorter duration, or a smaller quantity of traffic lights passed. Because a route with a higher score is selected as an initial route, the initial route is a route with a shorter route length, a route with a shorter duration, or a route with a smaller quantity of traffic lights passed in a plurality of routes, that is, the initial route is a better route in the plurality of routes, a better navigation route can be subsequently generated based on the better initial route.

In some of the embodiments, the terminal may obtain road attribute information of the initial route and obtain a remaining driving energy amount of the target vehicle, and generate a navigation route of the initial route when determining, based on the road attribute information and the remaining driving energy amount, that the target vehicle meets an on-route driving energy replenishment condition of the initial route. For example, the road attribute information may be specifically a route length of the initial route. When it is determined that a route length that the target vehicle can travel based on the remaining driving energy amount is less than the route length of the initial route, the target vehicle needs to perform driving energy replenishment on route if traveling along the initial route. In this case, it may be determined that the target vehicle meets the on-route driving energy replenishment condition of the initial route.

Further, when it is determined, based on road attribute information of an initially planned route and the remaining driving energy amount, that the target vehicle can travel from the start point to the end point based on the remaining driving energy amount, it is determined that the target vehicle does not meet an on-route driving energy replenishment condition of the initial planned route. In this case, the terminal directly uses the initial route as the navigation route. For example, if the driving energy is electric energy, when the terminal determines that the target vehicle can travel 500 kilometers based on a remaining power amount, and a route length of the initially planned route is 100 kilometers, the terminal may directly use the initially planned route as a navigation route without further generating a navigation route including a charging station label. For each of the at least one initial route, a corresponding navigation route can be determined in the foregoing manner.

In some of the embodiments, the road attribute information includes not only the route length, but also a traveling duration. The terminal may obtain a preset energy consumption model of the target vehicle. The energy consumption model is a model describing energy consumed by the target vehicle when the target vehicle travels a specific distance at different speeds. For example, the energy consumption model may be a model recording power consumed per 100 kilometers at different speeds. When obtaining the road attribute information of the initial route, the terminal may divide the route length in the road attribute information by the traveling duration in the road attribute information to obtain an average speed, then determine, based on the average speed and the energy consumption model, an amount of energy that the target vehicle needs to consume when the target vehicle travels along the initial route, and when the amount of energy is greater than the remaining driving energy amount of the target vehicle, determine that the target vehicle meets the on-route driving energy replenishment condition of the initial route. If the amount of energy is less than the remaining driving energy amount of the target vehicle, the terminal determines that the target vehicle does not meet the on-route driving energy replenishment condition of the initial route.

In the foregoing embodiments, when the on-route driving energy replenishment condition is not met, the initial route is directly used as the navigation route, so that an unnecessary navigation route generation process can be omitted, thereby reducing resources, such as a computer, consumed when the navigation route is generated based on the initial route. When the on-route driving energy replenishment condition is met, a navigation route that includes an energy replenishment location label and that corresponds to the initial route is generated, so that the owner can be prompted, based on the energy replenishment location label, of a driving energy replenishment location to which the owner needs to drive, thereby greatly improving the user experience.

In some of the embodiments, when it is determined, based on the road attribute information of the initial route and the remaining driving energy amount, that the target vehicle meets the on-route driving energy replenishment condition of the initial route, the generating a navigation route corresponding to the initial route includes: determining, for each of the at least one initial route, a plurality of target location points on the initial route, each of the target location points being one location point on the initial route; and selecting a plurality of candidate driving energy replenishment locations from the driving energy replenishment location data based on the plurality of target location points on the initial route; selecting at least one target driving energy replenishment location for energy replenishment succession from the candidate driving energy replenishment locations; and generating the navigation route corresponding to the initial route based on the start point to which the start point label points, the end point to which the end point label points, and the at least one target driving energy replenishment location.

In embodiments, when it is determined that the target vehicle needs to perform on-route driving energy replenishment in a process of traveling along the initial route, the terminal may obtain a plurality of target location points on the initial route. The plurality of target location points are location points extracted from the initial route. For example, the route may be considered as a location point sequence including a series of location points, and the target location points may be location points extracted from the initial route at specific intervals. The location point may be specifically a coordinate pair including a longitude and a latitude.

Further, the terminal may obtain driving energy replenishment location data. The driving energy replenishment location data is data recording all driving energy replenishment locations within a target region including the start point and the end point. For example, when the owner needs to drive from Province A to Province B, the driving energy replenishment location data may be data recording all driving energy replenishment locations in Province A, Province B, and provinces between Province A and Province B. When obtaining the driving energy replenishment location data, the terminal may select a plurality of candidate driving energy replenishment locations from the driving energy replenishment location data based on the plurality of target location points on the initial route. For example, a candidate driving energy replenishment location whose distance to the target location point meets a short-distance condition may be selected from the driving energy replenishment location data. When a plurality of candidate driving energy replenishment locations are obtained, the terminal may select at least one target driving energy replenishment location for energy replenishment from the plurality of candidate driving energy replenishment locations, that is, select at least one target driving energy replenishment location corresponding to the initial route from the plurality of candidate driving energy replenishment locations, and perform route re-planning by using each of the at least one target driving energy replenishment location corresponding to the initial route as a waypoint, to generate a navigation route corresponding to the initial route.

In the foregoing embodiments, the candidate driving energy replenishment locations are selected first, so that a quantity of the selected target driving energy replenishment locations can be reduced, thereby reducing a computing amount of selecting the target driving energy replenishment locations, and further saving computing energy consumed for selecting the target driving energy replenishment locations.

In some of the embodiments, the displaying an energy replenishment location label at a waypoint on the target navigation route includes: displaying the navigation route corresponding to the initial route; and displaying, when the navigation route corresponding to the initial route is the target navigation route, an energy replenishment location label corresponding to a respective one of the at least one target driving energy replenishment location on the navigation route corresponding to the initial route.

In embodiments, when a navigation route corresponding to the initial route is generated, the terminal may display the navigation route, and display a location label sequence on the navigation route. Alternatively, the terminal may display a location label sequence when the navigation route is a recommended navigation route or a switched-to navigation route to which a navigation route switching operation points. The location label sequence includes a start point label, one or more energy replenishment location labels respectively corresponding to the at least one target driving energy replenishment location, and an end point label. The at least one target driving energy replenishment location is at least one target driving energy replenishment location corresponding to the initial route. Different initial routes correspond to different location groups, each location group including at least one target driving energy replenishment location. The energy replenishment location label corresponding to the target driving energy replenishment location is a label displayed at a position corresponding to the target driving energy replenishment location on the corresponding navigation route.

In some of the embodiments, the terminal directly uses a plurality of selected candidate driving energy replenishment locations as target driving energy replenishment locations. Alternatively, when a quantity of the plurality of candidate driving energy replenishment locations is greater than a preset quantity threshold, the terminal determines a first route length that the target vehicle can travel based on the remaining driving energy amount, determines a second route length that the target vehicle can travel based on driving energy of the storage capacity, and divides the initial route based on the first route length and the second route length to obtain a plurality of sections, so that a length of a first section is a first route length, and lengths of subsequent sections are all second route lengths. For each of the plurality of sections, the terminal determines candidate driving energy replenishment locations whose distances to the section are less than or equal to a preset distance threshold, and uses any one of the determined candidate driving energy replenishment locations as a target driving energy replenishment location. In this way, when the owner drives on each of the plurality of sections, there is a corresponding driving energy replenishment location for driving energy replenishment. In some of the embodiments, the determining a plurality of target location points on the initial route includes: determining a plurality of location points on the initial route, and rarefying the plurality of location points to obtain a plurality of target location points. The selecting a plurality of candidate driving energy replenishment locations from the driving energy replenishment location data based on the plurality of target location points on the initial route includes: for each target location point in the plurality of target location points, selecting, from the driving energy replenishment location data, a candidate driving energy replenishment location whose distances to the target location point meets a short-distance condition.

In embodiments, the initial route may be converted into a series of coordinate point strings, each coordinate point in the coordinate point string being a location point. The terminal may rarefy the plurality of location points to obtain a plurality of target location points. For example, a quantity of to-be-extracted target location points may be determined in advance, and then the route length of the initial route is divided by the quantity of the to-be-extracted target location points to obtain an extraction interval distance, so that the terminal sequentially extracts target location points from the plurality of location points based on the extraction interval distance. For example, when the extraction interval distance is 10 kilometers, the terminal may extract one target location point every 10 kilometers. Alternatively, the extraction interval distance may be preset, so that the terminal may sequentially extract the target location points from the plurality of location points directly based on the preset extraction interval distance.

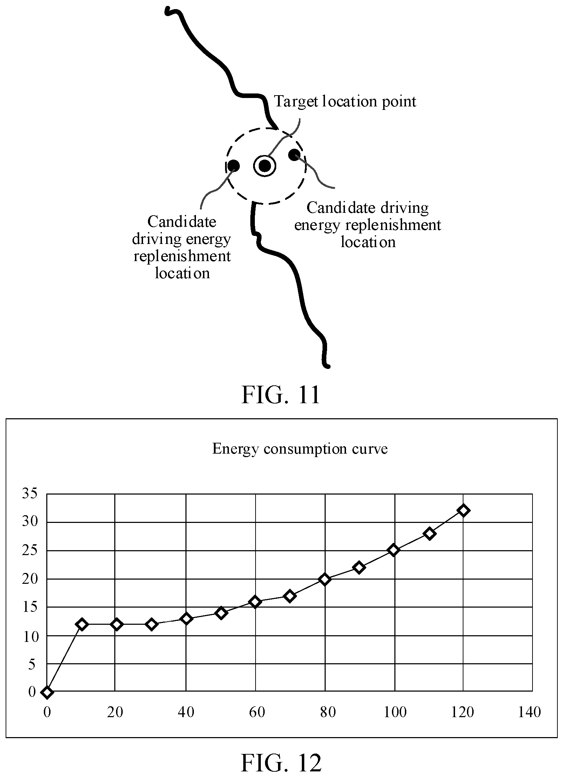

Further, when a plurality of target location points are extracted, for each target location point in the plurality of target location points, the terminal can select, from the driving energy replenishment location data, a candidate driving energy replenishment location whose distance to the target location point meets a short-distance condition. For example, referring to FIG. 11, for a target location point A, a preset length may be obtained, a circle may be drawn with the target location point A as a center of a circle and the preset length as a radius, and energy replenishment locations within the circle are used as candidate driving energy replenishment locations whose distances to the target location point meet a short-distance condition. FIG. 11 is a schematic diagram of determining candidate driving energy replenishment locations according to an embodiment.

In some of the embodiments, the candidate driving energy replenishment locations whose distances to the target location point meet the short-distance condition are referred to as candidate driving energy replenishment locations corresponding to the target location point. When a plurality of candidate driving energy replenishment locations corresponding to the target location point are obtained, some of the plurality of candidate driving energy replenishment locations may be further removed based on a pre-trained location selecting model. For example, the location selecting model may sort the plurality of candidate driving energy replenishment locations based on attribute information of the candidate driving energy replenishment locations, and remove some of the plurality of candidate driving energy replenishment locations based on a sorting result. The attribute information of the candidate driving energy replenishment locations may include popularity, quantities of charging piles, distances to the corresponding target location point, and the like of the candidate driving energy replenishment locations. Therefore, the location selecting model may score each candidate driving energy replenishment location based on the attribute information of the candidate driving energy replenishment locations, and remove candidate driving energy replenishment locations with scores less than a preset score threshold, to obtain suitable candidate driving energy replenishment locations.

In the foregoing embodiments, because the candidate driving energy replenishment location is a location whose distance to the corresponding target location point meets the short-distance condition, the owner can drive to the candidate driving energy replenishment location for driving energy replenishment without performing a large deviation, thereby reducing energy waste caused by a large deviation.

In some of the embodiments, the vehicle has a storage capacity. The selecting at least one target driving energy replenishment location for energy replenishment succession from the candidate driving energy replenishment locations includes: sorting the candidate driving energy replenishment locations in ascending order of distances to the start point to which the start point label points, to obtain an initial sequence; adding the start point to a head of the initial sequence, and adding the end point to which the end point label points to a tail of the initial sequence, to obtain a location sequence; obtaining an energy consumption model of the vehicle, and determining, based on the energy consumption model, an estimated energy consumption amount between each two locations in the location sequence; and performing at least one round of target driving energy replenishment location selection based on at least one of the estimated energy consumption amount between each two locations, the remaining driving energy amount, and the storage capacity, to obtain the at least one target driving energy replenishment location.

In embodiments, when obtaining the start point, the end point, and the plurality of candidate driving energy replenishment locations, the terminal may generate a location sequence including the start point, the end point, and the plurality of candidate driving energy replenishment locations. For example, the terminal may sort the plurality of candidate driving energy replenishment locations in ascending order of distances to the start point, to obtain an initial sequence, add the start point to a head of the initial sequence, and add the end point to a tail of the initial sequence, to obtain a location sequence.

Further, the terminal obtains a pre-generated energy consumption model of the target vehicle. The energy consumption model is a model reflecting energy consumed by the target vehicle when the target vehicle travels a specific distance at different speeds. For example, the energy consumption model may record power that needs to be consumed for the target vehicle to travel 100 kilometers at a speed of 10 to 80 km/h. When obtaining the energy consumption model of the target vehicle, the terminal may determine, based on the energy consumption model, an estimated energy consumption amount between each two locations in the location sequence. For example, if the location sequence includes a start point, a candidate driving energy replenishment location 1, a candidate driving energy replenishment location 2, and an end point, the terminal may determine, based on the energy consumption model, an estimated energy consumption amount corresponding to the start point and the candidate driving energy replenishment location 1, an estimated energy consumption amount corresponding to the start point and the candidate driving energy replenishment location 2, an estimated energy consumption amount corresponding to the start point and the end point, an estimated energy consumption amount corresponding to the candidate driving energy replenishment location 1 and the candidate driving energy replenishment location 2, and so on. An estimated energy consumption amount between two locations is an amount of energy that the target vehicle needs to consume on a section between the two locations. For example, when the driving energy is electric energy, the estimated energy consumption amount corresponding to the start point and the candidate driving energy replenishment location 2 is an amount of power that the target vehicle needs to consume when traveling from the start point to the candidate driving energy replenishment location 2.

Further, after determining the estimated energy consumption amount between each two locations in the location sequence, the terminal may perform at least one round of target driving energy replenishment location determining based on at least one of the estimated energy consumption amount between the two locations, the remaining driving energy amount, and the storage capacity until a preset stop condition is met, to obtain the at least one target driving energy replenishment location. The preset stop condition may be freely set as needed.

In some of the embodiments, different vehicle models have different energy consumption models. When the energy is electric energy, an energy consumption model of a vehicle may be shown in Table 1:

Table 1 Energy consumption model table of a vehicle

| Speed (KM/H) | Basic power consumption per 100 kilometers (kWh) | Additional power consumption for seat heating (kWh/hour) |
|---|---|---|
| 0 | 0 | 0.01 |
| 10 | 13 | 0.01 |
| 20 | 12 | 0.01 |
| 30 | 13 | 0.01 |
| 40 | 13 | 0.01 |
| 50 | 14 | 0.01 |
| 60 | 16 | 0.01 |
| 70 | 17 | 0.01 |
| 80 | 20 | 0.01 |
| 90 | 22 | 0.01 |
| 100 | 24 | 0.01 |
| 110 | 28 | 0.01 |
| 120 | 32 | 0.01 |

In some of the embodiments, FIG. 12 is a schematic diagram of an energy consumption curve according to an embodiment. Referring to FIG. 12, a horizontal ordinate may be a speed, and a vertical ordinate may be an amount of power consumed per 100 kilometers.

In the foregoing embodiments, because the energy consumption model is generated in advance, when a target driving energy replenishment location needs to be determined, the target driving energy replenishment location may be quickly determined based on the energy consumption model, thereby improving efficiency of determining the target driving energy replenishment location. In addition, because the energy consumption model includes energy consumption amounts per 100 kilometers corresponding to a plurality of speeds, an estimated energy consumption amount between each two of locations in the location sequence can be accurately determined based on the energy consumption model, thereby improving accuracy of the target driving energy replenishment location determined based on the estimated energy consumption amount between each two of the locations in the location sequence.

In some of the embodiments, the energy consumption model includes a plurality of energy consumption sub-models. The determining, based on the energy consumption model, an estimated energy consumption amount between each two locations in the location sequence includes: predicting, for each two locations in the location sequence, an average speed of the vehicle on a section between the two locations; selecting, from the plurality of energy consumption sub-models in the energy consumption model, a target energy consumption sub-model corresponding to the average speed; and determining the estimated energy consumption amount between the two locations based on the target energy consumption sub-model and a length of the section between the two locations.

In embodiments, when the estimated energy consumption amount between each two locations in the location sequence needs to be determined, for each two locations in the location sequence, the terminal may estimate an average speed of the target vehicle on a section between the two locations. For example, when the initial route is generated, a total travel duration of the initial route may be estimated, the route length of the initial route is divided by the total travel duration to obtain an average speed of the initial route, and the average speed of the initial route is used as an average speed on a section between two locations on the initial route. Further, the terminal selects a target energy consumption sub-model corresponding to the average speed from the energy consumption model. For example, referring to Table 1, when the average speed on the section between the two locations is 60 KM/H, it may be determined that the target energy consumption sub-model is that power consumption per 100 kilometers is 16 kWh. When the target energy consumption sub-model is selected, the terminal determines an estimated energy consumption amount corresponding to the two locations based on the target energy consumption sub-model and a length of the section between the two locations. For example, the terminal multiplies the target energy consumption sub-model by the length of the section between the two locations to obtain the estimated energy consumption amount corresponding to the two locations. For each two locations in the location sequence, a corresponding estimated energy consumption amount can be determined in the foregoing manner.

In some of the embodiments, the terminal may further estimate, based on a road condition of the section between the two locations, an average speed of the target vehicle on the section between the two locations. The road condition may be information representing a condition of a road. For example, the road condition may be a degree of road congestion, density of traffic lights on the road, a minimum speed limit on the road, or a maximum speed limit on the road. The average speed of the section is estimated by integrating road conditions in a plurality of dimensions, so that accuracy of the determined average speed can be improved.

In the foregoing embodiments, by estimating an average speed of the target vehicle on the section between the two locations, a corresponding target energy consumption sub-model can be selected from the energy consumption model based on the average speed, so that an estimated energy consumption amount corresponding to the two locations is accurately determined based on the selected target energy consumption sub-model.

In some of the embodiments, the performing at least one round of target driving energy replenishment location selection based on at least one of the estimated energy consumption amount between the two locations, the remaining driving energy amount, and the storage capacity, to obtain the at least one target driving energy replenishment location, includes: entering a current round of target driving energy replenishment location selection, including: determining a current location in the location sequence, when the current round is the first round, the current location being the start point, and when the current round is not the first round, the current location being a target driving energy replenishment location selected in a previous round, and selecting, with the current location as the start point, a target driving energy replenishment location from the plurality of candidate driving energy replenishment locations based on at least one of the estimated energy consumption amount between the two locations, the remaining driving energy amount, and the storage capacity; and entering a next round of target driving energy replenishment location selection, including returning to and repeating, with the selected target driving energy replenishment location as a new current location, to the current location as the start point, the step of selecting a target driving energy replenishment location from the plurality of candidate driving energy replenishment locations based on at least one of the estimated energy consumption amount between the two locations, the remaining driving energy amount, and the storage capacity with the current location as a start point, until a preset stop condition is met.

In embodiments, when the first round of target driving energy replenishment location selection is performed, the terminal may use the start point in the location sequence as the current location, select, with the current location as a start point, a candidate driving energy replenishment location farthest reachable by the target vehicle based on the remaining driving energy amount from the location sequence based on the estimated energy consumption amount between the two locations and the remaining driving energy amount, and use the farthest reachable candidate driving energy replenishment location as a target driving energy replenishment location selected in the first round. Further, using the target driving energy replenishment location selected in the first round as a new current location, the terminal enters a second round of target driving energy replenishment location selecting, and selects, with the current location as a start point, a candidate driving energy replenishment location farthest reachable by the target vehicle based on the storage capacity from the location sequence based on the estimated energy consumption amount between each two locations and the storage capacity, and uses the farthest reachable candidate driving energy replenishment location as a target driving energy replenishment location selected in the second round. Using the target driving energy replenishment location selected in the second round as a new current location, the terminal selects, with the current location as a start point, a candidate driving energy replenishment location farthest reachable by the target vehicle based on the storage capacity from the location sequence based on the estimated energy consumption amount between each two locations and the storage capacity, and uses the farthest reachable candidate driving energy replenishment location as a target driving energy replenishment location selected in a third round. This process is repeated in sequence until a preset stop condition is met. Energy replenishment location labels corresponding to the target driving energy replenishment locations selected until a stop condition is met form location labels for succession.

In some of the embodiments, the preset stop condition includes at least a first stop sub-condition and a second stop sub-condition. The first stop sub-condition is that an estimated energy consumption amount between the current location and a subsequent location is greater than a preset number times the storage capacity, the subsequent location being a location located behind the current location and adjacent to the current location in the location sequence. The second stop sub-condition is that a next location adjacent to the current location in the location sequence is the end point. For example, the location sequence includes a start point, a candidate driving energy replenishment location 1, a candidate driving energy replenishment location 2, a candidate driving energy replenishment location 3, and an end point. When the current location is the candidate driving energy replenishment location 2, and it is determined that the target vehicle cannot travel from the candidate driving energy replenishment location 2 to the candidate driving energy replenishment location 3 based on the storage capacity, it is determined that a next location closest to the current location in the location sequence is unreachable, and in this case, the first stop sub-condition is met. For another example, when the current location is the candidate driving energy replenishment location 3, and a next location closest to the candidate driving energy replenishment location 3 is the end point, it is determined that the second stop sub-condition is met.

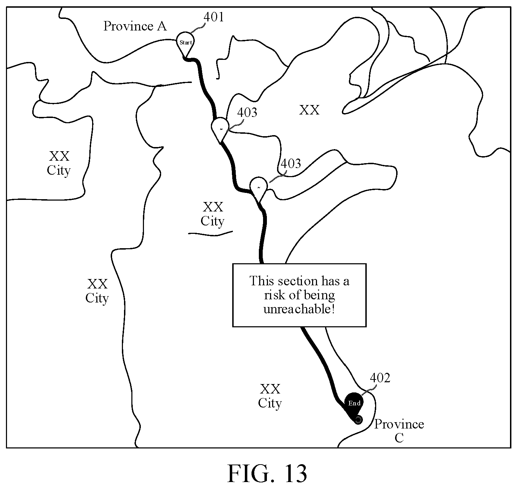

In some of the embodiments, when it is determined that the first stop sub-condition is met, and one or more energy replenishment location labels respectively corresponding to at least one target driving energy replenishment location are displayed on the navigation route corresponding to the initial route, prompt information may be displayed to prompt that a subsequent section has risk of being unreachable. For example, referring to FIG. 10, when the owner needs to drive the vehicle from Province A to Province C, if a charging station only exists between Province A and Province B, and no charging station is set up between Province B and Province C, in a process of determining a target charging station, because no charging station is set up between Province B and Province C, a charging station to which the target vehicle can travel based on the battery capacity cannot be found on a section between Province B and Province C. In this case, the first stop sub-condition is met. Therefore, when the navigation route is displayed, a reachable target charging station can be displayed on a section of the navigation route between Province A and Province B, and a prompt of a risk of being unreachable is provided on the section between Province B and Province C, to provide a risk prompt to the owner based on the prompt of the risk of being unreachable, thereby greatly improving the user experience. FIG. 13 is a schematic diagram of prompting a risk of being unreachable according to an embodiment.

In some of the embodiments, when it is determined that the first stop sub-condition is met, the terminal may further perform a plurality of rounds of supplementary selecting processes. The plurality of rounds of supplementary selecting processes in embodiments include: in a first supplementary selecting round, selecting, based on an estimated energy consumption amount between each two locations and the storage capacity, a candidate driving energy replenishment location farthest reachable by the target vehicle from a plurality of candidate driving energy replenishment locations by using the end point as a current location and the current location as a start point, and determining the candidate driving energy replenishment location as a target driving energy replenishment location; and entering a supplementary selecting round by using the target driving energy replenishment location as a new current location, returning to and repeating the step of selecting, based on the estimated energy consumption amount between the two locations and the storage capacity, a candidate driving energy replenishment location farthest reachable by the target vehicle from a plurality of candidate driving energy replenishment locations by using the current location as the start point, until a stop condition for supplementary selecting is met, for example, until a next location closest to the current location is unreachable. In this way, a plurality of target driving energy replenishment locations for energy succession starting from the start point can be obtained, and a plurality of target driving energy replenishment locations for energy succession starting from the end point can be obtained.

In the foregoing embodiments, a plurality of rounds of target driving energy replenishment location selection are performed, so that target driving energy replenishment locations can be completely selected.

In some of the embodiments, the estimated energy consumption amount between each two locations in the location sequence is included in an estimated energy consumption amount matrix. The estimated energy consumption amount matrix includes matrix rows respectively corresponding to the locations in the location sequence. For each matrix row in the estimated energy consumption amount matrix, the matrix row includes estimated energy consumption amounts respectively corresponding to a plurality of location groups, the plurality of location groups including location groups formed by a location corresponding to the matrix row and all locations in the location sequence. The selecting, with the current location as the start point, a target driving energy replenishment location from the plurality of candidate driving energy replenishment locations based on at least one of the estimated energy consumption amount between the two locations, the remaining driving energy amount, and the storage capacity includes: when the current location is the start point, selecting, based on the remaining driving energy amount, a first target estimated energy consumption amount from a plurality of estimated energy consumption amounts included in a first matrix row, the first matrix row being a matrix row corresponding to the start point in the estimated energy consumption amount matrix, the first target estimated energy consumption amount being less than the remaining driving energy amount, and a subsequent estimated energy consumption amount located behind the first target estimated energy consumption amount in the matrix row corresponding to the start point being greater than or equal to the remaining driving energy amount; and determining a location other than the start point in the location group corresponding to the first target estimated energy consumption amount as the target driving energy replenishment location for energy replenishment succession.

In embodiments, the estimated energy consumption amount between each two locations in the location sequence is recorded in a form of an estimated energy consumption amount matrix. For example, an estimated energy consumption amount matrix $K$ may be as follows:

$$K = \begin{bmatrix} & S & P1 & P2 & ... & E \\ S & 0 & 10 & 15 & ... & 150 \\ P1 & -10 & 0 & 5 & ... & 130 \\ P2 & & & & ... & \\ ... & & ... & ... & ... & ... \\ E & & ... & ... & ... & 0 \end{bmatrix}$$

where $K$ is an M*M matrix, M being a quantity of locations included in the location sequence plus 1. S represents a start point, $E$ represents an end point, P1 represents a candidate driving energy replenishment location closest to the start point in the location sequence, and P2 represents a candidate driving energy replenishment location second closest to the start point in the location sequence. $\{S, P1, P2, ..., E\}$ in the estimated energy consumption amount matrix $K$ is a location sequence. Therefore, the estimated energy consumption amount matrix includes matrix rows respectively corresponding to all locations in the location sequence, each matrix row including estimated energy consumption amounts respectively corresponding to a plurality of location groups.

The location group is the foregoing two locations. For each matrix row in the estimated energy consumption amount matrix, the matrix row includes amounts of energy that need be consumed to respectively travel to the locations in the location sequence by using a location corresponding to the matrix row as a start point. For example, for a matrix row corresponding to the start point, the matrix row corresponding to the start point is referred to as a first matrix row. The first matrix row includes estimated energy consumption amounts respectively corresponding to location groups each formed by the start point and each location in the location sequence. For example, in a case that a matrix row corresponding to the start point is {0, 10, ..., 150}, 0 represents that an estimated energy consumption amount corresponding to a location group formed by the start point and the start point is 0. In other words, 0 represents that an amount of energy that the target vehicle needs to consume is 0 when the target vehicle travels from the start point to the start point. 10 represents that an estimated energy consumption amount corresponding to a location group formed by the start point and the candidate driving energy replenishment location P1 is 10. In other words, 10 represents that an amount of energy that the target vehicle needs to consume is 10 when the target vehicle travels from the start point to the candidate driving energy replenishment location P1.

Further, when the current location is the start point, the terminal may use the start point as a start point, determine, in the location sequence, a candidate driving energy replenishment location farthest reachable by the target vehicle based on the remaining driving energy amount, and determine the candidate driving energy replenishment location as the target driving energy replenishment location. When a candidate driving energy replenishment location farthest reachable by the target vehicle based on the remaining driving energy amount needs to be determined in the location sequence, the terminal selects, based on the remaining driving energy amount, a first target estimated energy consumption amount from a matrix row corresponding to the start point in the estimated energy consumption amount matrix, the first target estimated energy consumption amount being less than the remaining driving energy amount, and a subsequent estimated energy consumption amount located behind the first target estimated energy consumption amount in the matrix row corresponding to the start point being greater than or equal to the remaining driving energy amount. For example, when the remaining driving energy amount is 11, in a case that the matrix row corresponding to the start point is {0, 10, 15, ..., 150}, it may be determined that 10 in the matrix row corresponding to the start point is the first target estimated energy consumption amount. An estimated energy consumption amount behind 10 is referred to as a subsequent estimated energy consumption amount. Because each matrix element in the matrix row is an estimated energy consumption amount corresponding to one location group, the terminal may determine a location group corresponding to the first target estimated energy consumption amount, and use a location other than the start point in the location group as a candidate driving energy replenishment location farthest reachable by the target vehicle based on the remaining driving energy amount. For example, when the first target estimated energy consumption amount is 10 in a matrix row {0, 10, 15, ..., 150}, it may be determined that a location group corresponding to 10 is (the start point, the candidate driving energy replenishment location P1). In this case, the candidate driving energy replenishment location P1 is determined as a target driving energy replenishment location selected in the first round.

In the foregoing embodiments, because the selected first target estimated energy consumption amount is less than the remaining driving energy amount, and a subsequent estimated energy consumption amount located behind the first target estimated energy consumption amount in the first matrix row is greater than or equal to the remaining driving energy amount, the target driving energy replenishment location corresponding to the first target estimated energy consumption amount is a farthest driving energy replenishment location to which the owner can travel based on the remaining driving energy amount. Because the farthest reachable location is used as the target driving energy replenishment location, a quantity of energy replenishment location labels displayed on the navigation route can be reduced, thereby reducing display resources consumed when an unnecessary energy replenishment location label is displayed.

In some of the embodiments, the method further includes: when the current location is not the start point, selecting, based on the storage capacity, a second target estimated energy consumption amount from a plurality of estimated energy consumption amounts included in a second matrix row, the second matrix row being a matrix row corresponding to the current location in the estimated energy consumption amount matrix, the second target estimated energy consumption amount being less than a preset number times the storage capacity, and a subsequent estimated energy consumption amount located behind the second target estimated energy consumption amount in the second matrix row being greater than or equal to the preset number times the storage capacity; and determining a location other than the current location in the location group corresponding to the second target estimated energy consumption amount as the target driving energy replenishment location for energy replenishment succession.

In embodiments, when the current location is not the start point, that is, in the remaining rounds other than the first round, the terminal may select, based on the storage capacity, a second target estimated energy consumption amount from a matrix row corresponding to the current location. For the convenience of description, when the current location is not the start point, the matrix row corresponding to the current location is referred to as a second matrix row. The second target estimated energy consumption amount is less than or equal to a preset number times the storage capacity, and a subsequent estimated energy consumption amount located behind the target estimated energy consumption amount in a matrix row corresponding to the current location is greater than the preset number times the storage capacity. For example, when the current location is the candidate driving energy replenishment location P1, the storage capacity is 50, the preset number is smaller than 1, for example, 0.8, and a matrix row corresponding to the candidate driving energy replenishment location P1 is {-10, 0, 5, 37, 70, ..., 130}, because the target vehicle can perform driving energy replenishment at the candidate driving energy replenishment location P1, a second target estimated energy consumption amount selected by the terminal from the corresponding matrix row is 37. Because a location group corresponding to 37 is (the candidate driving energy replenishment location P1, the candidate driving energy replenishment location P3), the terminal determines the candidate driving energy replenishment location P3 as a target driving energy replenishment location selected in the current round. The location also represents a farthest location to which the target vehicle can travel based on the preset number times the storage capacity by using the candidate driving energy replenishment location P1 as a start point. The preset number may be freely set as needed. For example, when the owner expects that 10% power remains after traveling from the current charging station to the next charging station, 0.9 may be inputted into a preset number input box 703 in FIG. 7.

In the foregoing embodiments, because the selected second target estimated energy consumption amount is less than or equal to the preset number times the storage capacity, and a subsequent estimated energy consumption amount located behind the second target estimated energy consumption amount in the second matrix row is greater than the preset number times the storage capacity, the target driving energy replenishment location corresponding to the second target estimated energy consumption amount is a farthest driving energy replenishment location to which the owner can travel based on the preset number times the storage capacity. Because the farthest reachable location is used as the target driving energy replenishment location, a quantity of energy replenishment location labels displayed on the navigation route can be reduced, thereby reducing display resources consumed when an unnecessary energy replenishment location label is displayed.

In some of the embodiments, after the plurality of candidate charging stations corresponding to the initial route are retrieved, an M*M matrix may be formed by adding the start point and the end point of the route. The terminal calculates an estimated energy consumption amount between each two locations by using a fast matrix route planning method with reference to the energy consumption model mentioned above, to obtain an estimated energy consumption amount matrix. The start point of the route is assigned with a current remaining driving energy of the target vehicle for calculating a farthest reachable candidate driving energy replenishment location V. The candidate driving energy replenishment location V is used as a start point, and the energy amount is assigned with a preset number times a storage capacity of the vehicle, for performing a next round of succession. By analogy, a succession connection planning is finally completed. If succession cannot be performed midway, a target driving energy replenishment location at which succession has been performed previously is retained. Using Province A to Province C as an example, target driving energy replenishment locations selected after succession is performed are distributed as shown in FIG. 4, and it can be clearly seen that the target driving energy replenishment locations are distributed relatively uniform, and are reachable pairwise based on remaining energy.

In some of the embodiments, the generating the navigation route corresponding to the initial route based on the start point to which the start point label points, the end point to which the end point label points, and the at least one target driving energy replenishment location includes: performing, based on the start point to which the start point label points and the end point to which the end point label points, route re-planning by using each of the at least one target driving energy replenishment location as the waypoint of the vehicle, to generate the navigation route corresponding to the initial route.

In embodiments, when obtaining at least one target driving energy replenishment location corresponding to the initial route, the terminal performs route re-planning by using each of the at least one target driving energy replenishment location as the waypoint of the target vehicle, to generate the navigation route corresponding to the initial route. In addition, the navigation route passes each of the at least one target driving energy replenishment location.

In some of the embodiments, the terminal may perform route re-planning based on a preset route planning function, so that the re-planned navigation route not only passes each of the at least one target driving energy replenishment location, but also can meet conditions such as a shorter distance and a shorter duration.

In summary, in a conventional solution, there is a problem of being unreachable caused by manual selection. In the conventional technology, when a user searches for a driving energy replenishment location in an electronic map application, the electronic map application may provide all driving energy replenishment locations, so that an owner can select, from the driving energy replenishment locations provided by the electronic map application, a driving energy replenishment location to drive to. However, because the owner cannot accurately learn of a distance that the vehicle continuously travels forward from a location of the vehicle, the selected driving energy replenishment location may be unreachable. In addition, in a long-distance scenario, because a plurality of driving energy replenishment locations need to be selected, a probability of selecting an unreachable driving energy replenishment location in a large sample space is very high. In an actual application, once unreachability occurs, it means that there is a high cost. However, in this application, because a location (the target driving energy replenishment location) at which driving energy replenishment needs to be performed on route can be automatically determined, and there is no need for the owner to perform manual selection, the efficiency of determining the target driving energy replenishment location is improved. In addition, because the target driving energy replenishment location is reachable, a probability that the target driving energy replenishment location is unreachable during traveling is reduced.

In the conventional solution, there is a problem of repeating selection after a deviation: Due to superimposition of a plurality of factors, the owner may deviate once or even a plurality of times during traveling. After a deviation occurs, based on an existing technical solution, each time the owner needs to manually re-search for and re-select a driving energy replenishment location, there is a problem of repeating selection a plurality of times. However, in this application, after a deviation, a target driving energy replenishment location can still be automatically determined based on a deviated route. Therefore, there is no such problem as repeating selection a plurality of times, thereby reducing resources consumed by repeating selection a plurality of times.

In the conventional solution, there is a problem of high costs of manual selection: During forward route planning, the owner pays specific cost when making a selection from a list of candidate driving energy replenishment locations. During traveling, the owner may deviate or refresh a route for a plurality of reasons, that is, route planning needs to be performed again. This also means that the owner needs to re-select a proper driving energy replenishment location, but the owner is mainly driving, and re-selection is a costly behavior. However, in this application, because the target driving energy replenishment location can be automatically determined, the owner can focus on driving, thereby improving driving safety.

In the conventional solution, there is a feasibility problem in a long-distance scenario: In a long-distance scenario, the owner needs to search for and select one or more driving energy replenishment locations. In a case that the owner cannot perceive and calculate a maximum distance that the vehicle can cruise from a location of the vehicle, in a large sample space, a probability that the selected driving energy replenishment location is unreachable is increased. However, in this application, because the target driving energy replenishment location is determined based on the remaining driving energy amount and the storage capacity, the determined target driving energy replenishment location is reachable.

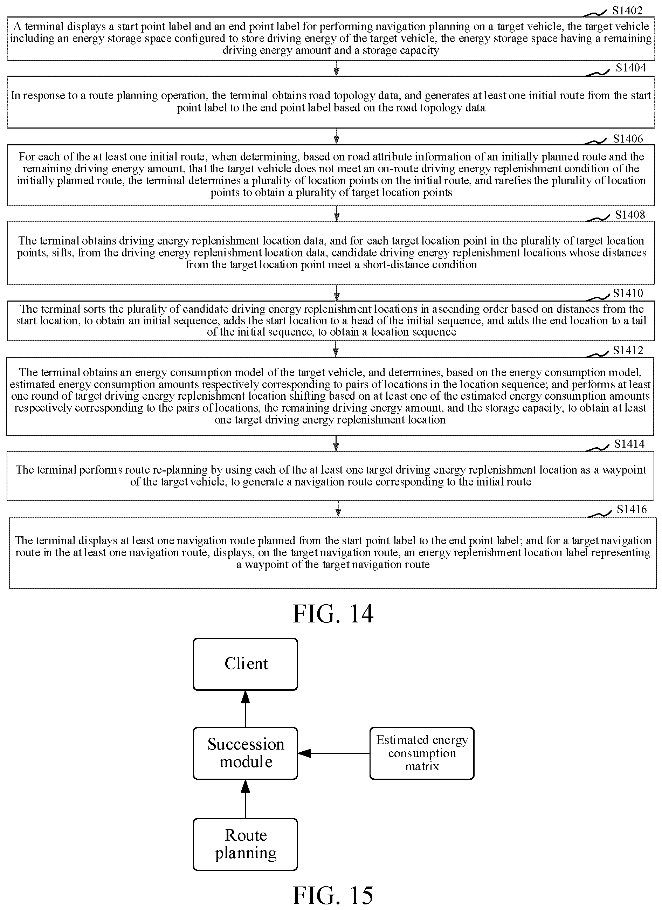

In a specific embodiment, referring to FIG. 14, FIG. 14 shows a method for controlling displaying of a navigation route according to a specific embodiment.

In embodiments of this application, the method may include Step 1402: A terminal displays a start point label and an end point label for performing navigation planning on a target vehicle, the target vehicle including an energy storage space configured to store driving energy of the target vehicle, the energy storage space having a remaining driving energy amount and a storage capacity.

In embodiments of this application, the method may further include Step 1404: In response to a route planning operation, the terminal obtains road topology data, and generates at least one initial route from the start point label to the end point label based on the road topology data.

In embodiments of this application, the method may further include Step 1406: For each of the at least one initial route, determine a plurality of location points on the initial route, and rarefy the plurality of location points to obtain a plurality of target location points.

In embodiments of this application, the method may further include Step 1408: The terminal obtains driving energy replenishment location data, and for each target location point in the plurality of target location points, selects, from the driving energy replenishment location data, a candidate driving energy replenishment location whose distance to the target location point meets a short-distance condition.

In embodiments of this application, the method may further include Step 1410: The terminal sorts the candidate driving energy replenishment locations in ascending order based on distances to the start point to which the start point label points, to obtain an initial sequence; and adds the start point to a head of the initial sequence, and adds the end point to which the end point label points to a tail of the initial sequence, to obtain a location sequence.

In embodiments of this application, the method may further include Step 1412: The terminal obtains an energy consumption model of the target vehicle, and determines, based on the energy consumption model, an estimated energy consumption amount between each two locations in the location sequence; and performs at least one round of target driving energy replenishment location selection based on at least one of the estimated energy consumption amount between the two locations, the remaining driving energy amount, and the storage capacity, to obtain at least one target driving energy replenishment location.

In embodiments of this application, the method may further include Step 1414: The terminal performs route re-planning by using each of the at least one target driving energy replenishment location as a waypoint of the target vehicle, to generate a navigation route corresponding to the initial route.

In embodiments of this application, the method may further include Step 1416: The terminal displays at least one navigation route planned from the start point label to the end point label; and for a target navigation route in the at least one navigation route, displays, on the target navigation route, an energy replenishment location label representing a waypoint of the target navigation route.

Although the steps in the flowcharts involved in the foregoing embodiments are displayed sequentially according to instructions of arrows, these steps are not necessarily performed sequentially according to a sequence instructed by the arrows. Unless otherwise clearly specified in this specification, the steps are performed without any strict sequence limit, and may be performed in other sequences. In addition, at least some of the steps in the flowcharts involved in the foregoing embodiments may include a plurality of steps or a plurality of stages. These steps or stages are not necessarily performed and completed at the same moment, and may be performed at different moments. Besides, the steps or stages may not be necessarily performed sequentially, and may be performed in turn or alternately with other steps or at least a part of steps or stages of other steps. It is further noted that the embodiments described with reference to the drawings in this application are merely exemplary, and it is not limited in this application that the respective method must include all the steps as described and illustrated; rather, the method in the application may include some or all of the steps as listed, and the steps may be combined with each other arbitrarily to form various embodiments of the application.

This application further provides an application scenario. The foregoing method for controlling displaying of a navigation route is applied to the application scenario. Specifically, the method for controlling displaying of a navigation route is applied to the application scenario as follows:

When an owner needs to drive a new energy vehicle from Province A to Province C, the owner may input Province A and Province C into a client of an electronic map application, to cause the electronic map application to perform initial route planning, and determine, based on an estimated energy consumption amount matrix and a succession module, a target charging station for power replenishment. The electronic map application performs secondary route planning based on the determined target charging station, to obtain and display a navigation route from Province A to Province C. A location label of the target charging station is displayed on the navigation route. Each target charging station is a waypoint of the navigation route, and each target charging station is a reachable charging station. FIG. 15 is a schematic diagram of a framework of controlling displaying of a navigation route according to an embodiment.

This application further provides an application scenario. The foregoing method for controlling displaying of a navigation route is applied to the application scenario. In embodiments, the method for controlling displaying of a navigation route is applied to the application scenario as follows:

When an owner needs to drive a vehicle from Province A to Province C, the owner may input Province A and Province C into an APP end of an electronic map application, to cause the electronic map application to perform initial route planning, and determine, based on an estimated energy consumption amount matrix and a succession module, a gas station for power replenishment. The electronic map application performs secondary route planning based on the determined target gas station, to obtain and display a navigation route from Province A to Province C. A location label of the target gas station is displayed on the navigation route. Each target gas station is a waypoint of the navigation route, and each target gas station is a reachable gas station.

The foregoing application scenarios are merely exemplary descriptions. The method for controlling displaying of a navigation route provided in the embodiments of this application is not limited to being applied to the foregoing scenarios.

Based on the same inventive idea, the embodiments of this application further provide an apparatus for controlling displaying of a navigation route, configured to implement the foregoing involved method for controlling displaying of a navigation route. The solution to the problem provided by the apparatus is similar to the solution described in the foregoing method. Therefore, for specific limitations in one or more embodiments of the apparatus for controlling displaying of a navigation route provided below, reference may be made to the limitations on the method for controlling displaying of a navigation route above. Details are not described herein again.

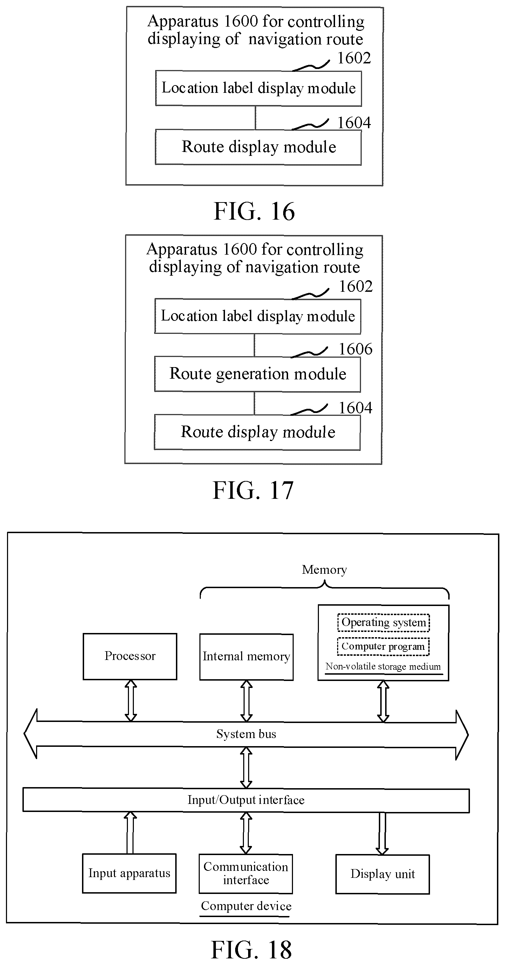

In some embodiments, as shown in FIG. 16, an apparatus 1600 for controlling displaying of a navigation route is provided, including: a route display module 1604.

The route display module 1604 is configured to display a navigation route from a start point label to an end point label; and display an energy replenishment location label on the navigation route, the energy replenishment location label representing a driving energy replenishment location for the vehicle that is a waypoint of the navigation route.

In some of the embodiments, the apparatus may further include a location label display module 1602. The location label display module 1602 is configured to display the start point label and the end point label for performing navigation planning on a target vehicle, the start point label representing a start point of the navigation planning, and the end point label representing an end point of the navigation planning.

In some of the embodiments, referring to FIG. 17, the location label display module 1602 is further configured to display a navigation map and a navigation trigger control in response to a navigation map display operation; and display the start point label and the end point label in the navigation map in response to a trigger operation on the navigation trigger control.

In some of the embodiments, the location label display module 1602 is further configured to display an initial page in response to the navigation map display operation, a start point input box, an end point input box, the navigation trigger control, and the navigation map being displayed in the initial page; in response to a first input operation on the start point input box, display, in the start point input box, the start point inputted through the first input operation; in response to a second input operation on the end point input box, display, in the end point input box, the end point inputted through the second input operation; and display, in response to the trigger operation on the navigation trigger control, the start point label corresponding to the start point and the end point label corresponding to the end point in the navigation map.

In some of the embodiments, the route display module 1604 is further configured to display vehicle information of the vehicle, the vehicle information including a remaining driving energy amount and a storage capacity of the vehicle, the storage capacity being a capacity of an energy storage space, the energy storage space being a space for storing driving energy of the vehicle; and display, in response to a confirmation operation on the vehicle information, the at least one navigation route planned from the start point label to the end point label.

In some of the embodiments, the route display module 1604 is further configured to display an information input page, and displaying, in response to a third input operation on the information input page, vehicle information inputted through the third input operation.

In some of the embodiments, a location label sequence from the start point label to the end point label is displayed on the navigation route. The location label sequence includes an energy replenishment location label located between the start point label and the end point label.

In some of the embodiments, in the location label sequence, an estimated energy consumption amount of a section between first two location labels is not greater than the remaining driving energy amount, and an estimated energy consumption amount of a section between any adjacent energy replenishment location labels is not greater than the storage capacity.

In some of the embodiments, the navigation route is a recommended navigation route or a switched-to navigation route to which a navigation route switching operation points. The route display module 1604 is further configured to display at least one navigation route planned from the start point label to the end point label, highlight the recommended navigation route in the at least one navigation route, and display the energy replenishment location label on the recommended navigation route; and/or in response to the navigation route switching operation, switch from highlighting the recommended navigation route to highlighting the switched-to navigation route to which the navigation route switching operation points, and switch from displaying the energy replenishment location label on the recommended navigation route to displaying an energy replenishment location label on the switched-to navigation route.

In some of the embodiments, the energy replenishment location label displayed on the recommended navigation route and the energy replenishment location label displayed on the switched-to navigation route are not completely the same.

In some of the embodiments, the route display module is further configured to display label information corresponding to each energy replenishment location label, the label information including at least one of a time spent for driving energy of the vehicle to be replenished to a preset amount, a time spent for the vehicle to travel to an energy replenishment location to which the corresponding energy replenishment location label points, and a quantity of energy replenishment devices at the energy replenishment location to which the corresponding energy replenishment location label points.

In some of the embodiments, the apparatus 1600 for controlling displaying of a navigation route further includes a route generation module 1606, configured to obtain road topology data, and generating at least one initial route from the start point label to the end point label based on the road topology data; and obtain driving energy replenishment location data; and generating a navigation route corresponding to a respective one of the at least one initial route based on the driving energy replenishment location data.

In some of the embodiments, the route generation module 1606 is further configured to: determine, for each of the at least one initial route, a plurality of target location points on the initial route, each of the target location points being one location point on the initial route; select a plurality of candidate driving energy replenishment locations from the driving energy replenishment location data based on the plurality of target location points on the initial route; select at least one target driving energy replenishment location for energy replenishment succession from the candidate driving energy replenishment locations; and generate the navigation route corresponding to the initial route based on the start point to which the start point label points, the end point to which the end point label points, and the at least one target driving energy replenishment location.

In some of the embodiments, the route display module 1604 is further configured to display the navigation route corresponding to the initial route; and display, when the navigation route corresponding to the initial route is the target navigation route, an energy replenishment location label y corresponding to a respective one of the at least one target driving energy replenishment location on the navigation route corresponding to the initial route.

In some of the embodiments, the route generation module 1606 is further configured to determine a plurality of location points on the initial route, and rarefy the plurality of location points to obtain the plurality of target location points; and for each target location point in the plurality of target location points, select, from the driving energy replenishment location data, a candidate driving energy replenishment location whose distance to the target location point meets a short-distance condition.

In some of the embodiments, the vehicle has a storage capacity. The route generation module 1606 is further configured to sort the candidate driving energy replenishment locations in ascending order of distances to the start point to which the start point label points, to obtain an initial sequence; add the start point to a head of the initial sequence, and add the end point to which the end point label points to a tail of the initial sequence, to obtain a location sequence; obtain an energy consumption model of the vehicle, and determine, based on the energy consumption model, the estimated energy consumption amount between each two locations in the location sequence; and perform at least one round of target driving energy replenishment location selection based on at least one of the estimated energy consumption amount between the two locations, the remaining driving energy amount, and the storage capacity, to obtain the at least one target driving energy replenishment location.

In some of the embodiments, the energy consumption model includes a plurality of energy consumption sub-models. The route generation module 1606 is further configured to: predict, for each two locations in the location sequence, an average speed of the vehicle on a section between the two locations; select, from the plurality of energy consumption sub-models in the energy consumption model, a target energy consumption sub-model corresponding to the average speed; and determine the estimated energy consumption amount between the two locations based on the target energy consumption sub-model and a length of the section between the two locations.

In some of the embodiments, the route generation module 1606 is further configured to enter a current round of target driving energy replenishment location selection, including: determining a current location in the location sequence, where when the current round is the first round, the current location being the start point, and when the current round is not the first round, the current location being a target driving energy replenishment location selected in a previous round, and selecting, with the current location as a start point, a target driving energy replenishment location from the plurality of candidate driving energy replenishment locations based on at least one of the estimated energy consumption amount between the two locations, the remaining driving energy amount, and the storage capacity; enter a next round of target driving energy replenishment location selection, including return to and repeating, with the selected target driving energy replenishment location as a new current location, the step of selecting a target driving energy replenishment location from the plurality of candidate driving energy replenishment locations based on at least one of the estimated energy consumption amount between the two locations, the remaining driving energy amount, and the storage capacity with the current location as a start point, until a preset stop condition is met.

In some of the embodiments, the estimated energy consumption amount between each two locations in the location sequence is included in an estimated energy consumption amount matrix. The estimated energy consumption amount matrix includes matrix rows respectively corresponding to the locations in the location sequence. For each matrix row in the estimated energy consumption amount matrix, the matrix row includes estimated energy consumption amounts respectively corresponding to a plurality of location groups, the plurality of location groups including location groups each formed by a location corresponding to the matrix row and a respective location in the location sequence. The route generation module 1606 is further configured to: when the current location is not the start point, select, based on the remaining driving energy amount, a first target estimated energy consumption amount from a plurality of estimated energy consumption amounts included in a first matrix row, the first matrix row being a matrix row corresponding to the start point in the estimated energy consumption amount matrix, the first target estimated energy consumption amount being less than the remaining driving energy amount, and a subsequent estimated energy consumption amount located behind the first target estimated energy consumption amount in the first matrix row being greater than or equal to the remaining driving energy amount; and determine a location other than the start point in the location group corresponding to the first target estimated energy consumption amount as the target driving energy replenishment location for energy replenishment succession.

In some of the embodiments, the route generation module 1606 is further configured to: when the current location is not the start point, select, based on the storage capacity, a second target estimated energy consumption amount from a plurality of estimated energy consumption amounts included in a second matrix row, the second matrix row being a matrix row corresponding to the current location in the estimated energy consumption amount matrix, the second target estimated energy consumption amount being less than a preset number times the storage capacity, and a subsequent estimated energy consumption amount located behind the second target estimated energy consumption amount in the second matrix row being greater than or equal to the preset number times the storage capacity; and determine a location other than the current location in the location group corresponding to the second target estimated energy consumption amount as the target driving energy replenishment location for energy replenishment succession.

In some of the embodiments, the preset stop condition includes at least a first stop sub-condition and a second stop sub-condition. The first stop sub-condition is that an estimated energy consumption amount between the current location and a subsequent location is greater than the preset number times the storage capacity, the subsequent location being a location located behind the current location and adjacent to the current location in the location sequence. The second stop sub-condition is that a next location adjacent to the current location in the location sequence is the end point.

In some of the embodiments, the route generation module 1606 is further configured to perform based on the start point to which the start point label points and the end point to which the end point label points, route re-planning by using each of the at least one target driving energy replenishment location as the waypoint of the vehicle, to generate the navigation route corresponding to the initial route. The waypoint is a location that the route passes. For example, referring to FIG. 4, locations to which 405 and 406 in FIG. 4 point are waypoints of the target navigation route.

The modules in the foregoing apparatus for controlling displaying of a navigation route may be implemented entirely or partially by software, hardware, or a combination thereof. The foregoing modules may be built in or independent of a processor of a computer device in a hardware form, or may be stored in a memory of the computer device in a software form, so that the processor invokes and performs an operation corresponding to each of the foregoing modules.

In an embodiment, a computer device is provided. The computer device may be a terminal, and an internal structure diagram thereof may be shown in FIG. 18. The computer device includes a processor, a memory, an input/output interface, a communication interface, a display unit, and an input apparatus. The processor, the memory, and the input/output interface are connected by a system bus, and the communication interface, the display unit, and the input apparatus are connected to the system bus by the input/output interface. The processor of the computer device is configured to provide computing and control capabilities. The memory of the computer device includes a non-volatile storage medium and an internal memory. The non-volatile storage medium stores an operating system and a computer program. The internal memory provides an environment for running of the operating system and the computer program in the non-volatile storage medium. The input/output interface of the computer device is configured to exchange information between the processor and an external device. The communication interface of the computer device is configured for wired or wireless communication with an external terminal. The wireless manner may be implemented through Wi-Fi, a mobile cellular network, near field communication (NFC), or other technologies. The computer program is executed by the processor to implement a method for controlling displaying of a navigation route. The display unit of the computer device is configured to form a visually visible picture, and may be a display screen, a projection apparatus, or a virtual reality imaging apparatus. The display screen of the computer device may be a liquid crystal display screen or an electronic ink display screen. The input apparatus of the computer device may be a touch layer covering the display screen, or may be a key, a trackball, or a touch pad disposed on a housing of the computer device, or may be an external keyboard, a touch pad, a mouse, or the like.

A person skilled in the art may understand that, the structure shown in FIG. 18 is only a block diagram of a part of a structure related to a solution of this application and does not limit the computer device to which the solution of this application is applied. Specifically, the computer device may include more or fewer members than those in the drawings, or include a combination of some members, or include different member layouts.

In some embodiment, a computer device is provided, including a memory and a processor, the memory storing a computer program, the processor, when executing the computer program, implementing the operations in the foregoing method embodiments. In an embodiment, a computer-readable storage medium is provided, having a computer program stored therein. When executed by the processor, the computer program causes the processor to perform the steps in the foregoing method embodiments.

In an embodiment, a computer program product or a computer program is provided. The computer program product or the computer program includes computer instructions, and the computer instructions are stored in a computer-readable storage medium. The processor of the computer device reads the computer instructions from the computer-readable storage medium, and the processor executes the computer instructions, to cause the computer device to perform the steps in the method embodiments.

All the user information (including, but not limited to, user equipment information, personal information of users, and the like) and data (including, but not limited to, data for analysis, stored data, displayed data, and the like) included in this application are information and data authorized by the users or fully authorized by all parties. In addition, the collection, use, and processing of relevant data need to comply with relevant laws, regulations, and standards of relevant countries and regions.

A person of ordinary skill in the art may understand that all or some of procedures of the method in the foregoing embodiments may be implemented by a computer program instructing relevant hardware. The computer program may be stored in a non-volatile computer-readable storage medium. When the computer program is executed, the procedures of the foregoing method embodiments may be implemented. Any reference to a memory, a database, or another medium used in the embodiments provided in this application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric m random access memory (FRAM), a phase change memory (PCM), a graphene memory, and the like. The volatile memory may include a random access memory (RAM), an external cache, or the like. For the purpose of description instead of limitation, the RAM is available in a plurality of forms, such as a static RAM (SRAM) or a dynamic RAM (DRAM). The database involved in the embodiments provided in this application may include at least one of a relational database and a non-relational database. The non-relational database may include a blockchain-based distributed database and the like, but is not limited thereto. The processor involved in the embodiments provided in this application may be a general-purpose processor, a central processing unit, a graphics processing unit, a digital signal processor, a programmable logic device, a data processing logic device based on quantum computing, or the like, but is not limited thereto.

Technical features of the foregoing embodiments may be combined in different manners to form other embodiments. For concise description, not all possible combinations of the technical features in the embodiment are described. However, provided that combinations of the technical features do not conflict with each other, the combinations of the technical features are considered as falling within the scope recorded in this specification.

The foregoing embodiments only describe several implementations of this application specifically and in detail, but cannot be construed as a limitation to the patent scope of this application. A person of ordinary skill in the art may make various changes and improvements without departing from the ideas of the present disclosure, which shall all fall within the protection scope of the present disclosure. Therefore, the protection scope of this application is subject to the protection scope of the appended claims.

**Claims**

1. A method for controlling displaying of a navigation route, the method comprising:

   displaying a navigation route from a start point label to an end point label; and
   displaying an energy replenishment location label on the navigation route, the energy replenishment location label being a waypoint representing a driving energy replenishment location for the vehicle.

2. The method according to claim 1, wherein the start point label and end point label are displayed by:

   displaying a navigation map and a navigation trigger control in response to a navigation map display operation; and
   displaying the start point label and the end point label in the navigation map in response to a trigger operation on the navigation trigger control.

3. The method according to claim 2, wherein the displaying a navigation map in response to a navigation map display operation comprises:

   displaying an initial page in response to the navigation map display operation, a start point input box, an end point input box, the navigation trigger control, and the navigation map being displayed in the initial page;

in response to a first input operation on the start point input box, displaying, in the start point input box, the start point inputted through the first input operation; and

in response to a second input operation on the end point input box, displaying, in the end point input box, the end point inputted through the second input operation; and

the displaying the start point label and the end point label in the navigation map in response to a trigger operation on the navigation trigger control comprises:

displaying, in response to the trigger operation on the navigation trigger control, the start point label corresponding to the start point and the end point label corresponding to the end point in the navigation map.

4. The method according to any one of claims 1 to 3, wherein the displaying a navigation route from the start point label to the end point label comprises:

displaying vehicle information of the vehicle, the vehicle information being used for generating the navigation route, and the vehicle information comprising a remaining driving energy amount and a storage capacity of the vehicle, the storage capacity being a capacity of an energy storage space, the energy storage space being a space for storing driving energy of the vehicle; and

displaying, in response to a confirmation operation on the vehicle information, the navigation route from the start point label to the end point label.

5. The method according to claim 4, wherein the displaying vehicle information of the vehicle comprises:
displaying an information input page, and displaying, in response to a third input operation on the information input page, vehicle information inputted through the third input operation.

6. The method according to claim 4 or 5, wherein a location label sequence from the start point label to the end point label is displayed on the navigation route, the location label sequence comprising an energy replenishment location label located between the start point label and the end point label.

7. The method according to claim 6, wherein in the location label sequence, an estimated energy consumption amount of a section between first two location labels is not greater than the remaining driving energy amount, and an estimated energy consumption amount of a section between any adjacent energy replenishment location labels is not greater than the storage capacity.

8. The method according to any one of claims 1 to 7, wherein the navigation route is a recommended navigation route or a switched-to navigation route to which a navigation route switching operation points; and the displaying the navigation route from the start point label to the end point label comprises:

displaying at least one navigation route from the start point label to the end point label, highlighting the recommended navigation route in the at least one navigation route, and displaying the energy replenishment location label on the recommended navigation route; and/or

in response to the navigation route switching operation, switching from highlighting the recommended navigation route to highlighting the switched-to navigation route, and switching from displaying the energy replenishment location label on the recommended navigation route to displaying an energy replenishment location label on the switched-to navigation route.

9. The method according to claim 8, wherein the energy replenishment location label displayed on the recommended navigation route and the energy replenishment location label displayed on the switched-to navigation route are not completely the same.

10. The method according to any one of claims 1 to 9, further comprising:
displaying label information corresponding to each energy replenishment location label, the label information comprising at least one of a time spent for driving energy of the vehicle to be replenished to a preset amount, a time spent for the vehicle to travel to an energy replenishment location to which the corresponding energy replenishment location label points, and a quantity of energy replenishment devices at the energy replenishment location.

11. The method according to any one of claims 1 to 10, wherein the navigation route is generated by:

obtaining road topology data, and generating at least one initial route from the start point label to the end point label based on the road topology data;

obtaining driving energy replenishment location data; and

generating a navigation route corresponding to a respective one of the at least one initial route based on the driving energy replenishment location data.

12. The method according to claim **11,** wherein the generating a navigation route corresponding to a respective one of the at least one initial route based on the driving energy replenishment location data comprises:

determining, for each of the at least one initial route, a plurality of target location points on the initial route, each of the target location points being one location point on the initial route;

selecting a plurality of candidate driving energy replenishment locations from the driving energy replenishment location data based on the plurality of target location points on the initial route;

selecting at least one target driving energy replenishment location for energy replenishment succession from the candidate driving energy replenishment locations; and

generating the navigation route corresponding to the initial route based on the start point, the end point, and the at least one target driving energy replenishment location.

13. The method according to any one of claims 1 to 12, wherein the displaying an energy replenishment location label on the navigation route comprises:

displaying the navigation route corresponding to the initial route; and

displaying, when the navigation route corresponding to the initial route is a target navigation route, an energy replenishment location label corresponding to a respective one of the at least one target driving energy replenishment location on the navigation route corresponding to the initial route.

14. The method according to claim 12, wherein the determining a plurality of target location points on the initial route comprises:

determining a plurality of location points on the initial route, and rarefying the plurality of location points to obtain the plurality of target location points; and

the selecting a plurality of candidate driving energy replenishment locations from the driving energy replenishment location data based on the plurality of target location points on the initial route comprises:

for each target location point in the plurality of target location points, selecting, from the driving energy replenishment location data, a candidate driving energy replenishment location whose distance to the target location point meets a short-distance condition.

15. The method according to claim 12, wherein the vehicle has a storage capacity; and the selecting at least one target driving energy replenishment location for energy replenishment succession from the candidate driving energy replenishment locations comprises:

sorting the candidate driving energy replenishment locations in ascending order of distances to the start point, to obtain an initial sequence;

adding the start point to a head of the initial sequence, and adding the end point to a tail of the initial sequence, to obtain a location sequence;

obtaining an energy consumption model of the vehicle, and determining, based on the energy consumption model, an estimated energy consumption amount between each two locations in the location sequence; and

performing at least one round of target driving energy replenishment location selection based on at least one of the estimated energy consumption amount between each two locations, the remaining driving energy amount, and the storage capacity, to obtain the at least one target driving energy replenishment location.

16. The method according to claim 15, wherein the energy consumption model comprises a plurality of energy consumption sub-models; and the determining, based on the energy consumption model, an estimated energy consumption amounts between each two locations in the location sequence comprises:

predicting, for each two locations in the location sequence, an average speed of the vehicle on a section between the two locations;

selecting, from the plurality of energy consumption sub-models in the energy consumption model, a target energy consumption sub-model corresponding to the average speed; and

determining the estimated energy consumption amount between the two locations based on the target energy consumption sub-model and a length of the section between the two locations.

17. The method according to claim 15, wherein the performing at least one round of target driving energy replenishment location selection based on at least one of the estimated energy consumption amount between each two locations, the remaining driving energy amount, and the storage capacity, to obtain the at least one target driving energy replenishment location, comprises:

entering a current round of target driving energy replenishment location selection, comprising: determining a current location in the location sequence, wherein when the current round is the first round, the current location is the start point, and when the current round is not the first round, the current location is a target driving energy replenishment location selected in a previous round;

selecting, with the current location as a start point, a target driving energy replenishment location from the plurality of candidate driving energy replenishment locations based on at least one of the estimated energy consumption amount between the two locations, the remaining driving energy amount, and the storage capacity; and

entering a next round of target driving energy replenishment location selection, comprising: returning to and repeating, with the selected target driving energy replenishment location as a new current location, the step of selecting a target driving energy replenishment location from the plurality of candidate driving energy replenishment locations based on at least one of the estimated energy consumption amount between the two locations, the remaining driving energy amount, and the storage capacity with the current location as a start point, until a preset stop condition is met.

18. The method according to claim 17, wherein the estimated energy consumption amount between each two locations in the location sequence is comprised in an estimated energy consumption amount matrix, the estimated energy consumption amount matrix comprising matrix rows respectively corresponding to the locations in the location sequence;

each matrix row in the estimated energy consumption amount matrix comprises estimated energy consumption amounts respectively corresponding to a plurality of location groups, the plurality of location groups comprising location groups each formed by a location corresponding to the matrix row and a respective location in the location sequence; and

the selecting, with the current location as a start point, a target driving energy replenishment location from the plurality of candidate driving energy replenishment locations based on at least one of the estimated energy consumption amount between the two locations, the remaining driving energy amount, and the storage capacity comprises:

when the current location is the start point, selecting, based on the remaining driving energy amount, a first target estimated energy consumption amount from a plurality of estimated energy consumption amounts comprised in a first matrix row, the first matrix row being a matrix row corresponding to the start point in the estimated energy consumption amount matrix, the first target estimated energy consumption amount being less than the remaining driving energy amount, and a subsequent estimated energy consumption amount located behind the first target estimated energy consumption amount in the first matrix row being greater than or equal to the remaining driving energy amount; and

determining a location other than the start point in the location group corresponding to the first target estimated energy consumption amount as the target driving energy replenishment location for energy replenishment succession.

19. The method according to claim 17 or 18, further comprising:

when the current location is not the start point, selecting, based on the storage capacity, a second target estimated energy consumption amount from a plurality of estimated energy consumption amounts comprised in a second matrix row, the second matrix row being a matrix row corresponding to the current location in the estimated energy consumption amount matrix, the second target estimated energy consumption amount being less than a preset number times the storage capacity, and a subsequent estimated energy consumption amount located behind the second target estimated energy consumption amount in the second matrix row being greater than or equal to the preset number times the storage capacity; and

determining a location other than the current location in the location group corresponding to the second target estimated energy consumption amount as the target driving energy replenishment location for energy replenishment succession.

20. The method according to any one of claims 17 to 19, wherein the preset stop condition comprises at least a first stop sub-condition and a second stop sub-condition;

the first stop sub-condition is that an estimated energy consumption amount between the current location and a subsequent location is greater than the preset number times the storage capacity, the subsequent location being a location located behind the current location and adjacent to the current location in the location sequence; and the second stop sub-condition is that a next location adjacent to the current location in the location sequence is the end point.

21. The method according to any one of claims 12 to 20, wherein the generating the navigation route corresponding to the initial route based on the start point, the end point, and the at least one target driving energy replenishment location comprises:
performing, based on the start point and the end point, route re-planning by using each of the at least one target driving energy replenishment location as the waypoint of the vehicle, to generate the navigation route corresponding to the initial route.

22. An apparatus for controlling displaying of a navigation route, comprising:
a route display module, configured to display a navigation route from a start point label to an end point label; and display an energy replenishment location label on the navigation route, the energy replenishment location label being a waypoint representing a driving energy replenishment location for the vehicle.

23. A computer device, comprising a memory and a processor, the memory having a computer program stored therein, and the processor, when executing the computer program, implementing the operations of the method according to any one of claims 1 to 21.

24. A computer-readable storage medium, having a computer program stored thereon, the computer program, when executed by a processor, implementing the operations of the method according to any one of claims 1 to 21.

25. A computer program product, comprising a computer program, the computer program, when executed by a processor, implementing the operations of the method according to any one of claims 1 to 21.

104

Server

Data storage system

...

Network

102

Terminal

Example

FIG. 1

Display a start point label and an end point label for performing navigation planning on a vehicle, the start point label representing a start point of the navigation planning, and the end point label representing an end point of the navigation planning

~ S202

Display at least one navigation route planned from the start point label to the end point label

~ S204

Display, for a target navigation route in the at least one navigation route, an energy replenishment location label on the target navigation route, the energy replenishment location label being a label representing a waypoint of the target navigation route, the waypoint represented by the energy replenishment location label being a vehicle driving energy replenishment location, and the target navigation route being one of the at least one navigation route

~ S206

FIG. 2

FIG. 3

FIG. 4

FIG. 5

603

601

○ Input a start location

● Input an end location

Driving    Walking    Cycling

602

Start navigation    Familiar route

Waypoint

50 km

FIG. 6

○ Input a start location

● Input an end location

Driving    Walking

701

Remaining driving energy amount:    XXX

701

Storage capacity:    XXX

703

Preset Number:    XXX

702

Confirm

Start navigation    Familiar route

Waypoint

50 km

FIG. 7

FIG. 8

FIG. 9

FIG. 10

Target location point

Candidate driving energy replenishment location

Candidate driving energy replenishment location

FIG. 11

Energy consumption curve

FIG. 12

FIG. 13

S1402

A terminal displays a start point label and an end point label for performing navigation planning on a target vehicle, the target vehicle including an energy storage space configured to store driving energy of the target vehicle, the energy storage space having a remaining driving energy amount and a storage capacity

↓ S1404

In response to a route planning operation, the terminal obtains road topology data, and generates at least one initial route from the start point label to the end point label based on the road topology data

↓ S1406

For each of the at least one initial route, when determining, based on road attribute information of an initially planned route and the remaining driving energy amount, that the target vehicle does not meet an on-route driving energy replenishment condition of the initially planned route, the terminal determines a plurality of location points on the initial route, and rarefies the plurality of location points to obtain a plurality of target location points

↓ S1408

The terminal obtains driving energy replenishment location data, and for each target location point in the plurality of target location points, sifts, from the driving energy replenishment location data, candidate driving energy replenishment locations whose distances from the target location point meet a short-distance condition

↓ S1410

The terminal sorts the plurality of candidate driving energy replenishment locations in ascending order based on distances from the start location, to obtain an initial sequence, adds the start location to a head of the initial sequence, and adds the end location to a tail of the initial sequence, to obtain a location sequence

↓ S1412

The terminal obtains an energy consumption model of the target vehicle, and determines, based on the energy consumption model, estimated energy consumption amounts respectively corresponding to pairs of locations in the location sequence; and performs at least one round of target driving energy replenishment location shifting based on at least one of the estimated energy consumption amounts respectively corresponding to the pairs of locations, the remaining driving energy amount, and the storage capacity, to obtain at least one target driving energy replenishment location

↓ S1414

The terminal performs route re-planning by using each of the at least one target driving energy replenishment location as a waypoint of the target vehicle, to generate a navigation route corresponding to the initial route

↓ S1416

The terminal displays at least one navigation route planned from the start point label to the end point label; and for a target navigation route in the at least one navigation route, displays, on the target navigation route, an energy replenishment location label representing a waypoint of the target navigation route

FIG. 14

Client

Succession module

Estimated energy consumption matrix

Route planning

FIG. 15

Apparatus 1600 for controlling displaying of navigation route

1602

Location label display module

1604

Route display module

FIG. 16

Apparatus 1600 for controlling displaying of navigation route

1602

Location label display module

1606

Route generation module

1604

Route display module

FIG. 17

Memory

Operating system

Computer program

Non-volatile storage medium

Processor

Internal memory

System bus

Input/Output interface

Input apparatus

Communication interface

Display unit

Computer device

FIG. 18

## INTERNATIONAL SEARCH REPORT

| International application No. |
| --- |
| **PCT/CN2023/130008** |

| A. | CLASSIFICATION OF SUBJECT MATTER |
| --- | --- |

G01C21/34(2006.01)i;  G01C21/36(2006.01)i

According to International Patent Classification (IPC) or to both national classification and IPC

| B. | FIELDS SEARCHED |
| --- | --- |

Minimum documentation searched (classification system followed by classification symbols)

IPC: G01C, G06F

Documentation searched other than minimum documentation to the extent that such documents are included in the fields searched

Electronic data base consulted during the international search (name of data base and, where practicable, search terms used)

CNTXT, CNKI, ENTXTC, WPABSC, DWPI: 腾讯科技, 导航, 路径, 路线, 规划, 显示, 拓扑, 标签, 指示, 图标, 起点, 起始, 终点, 终止, 目的地, 加油, 充电, 能源, 补充, 沿途, 途经, 剩余, 优化, 矩阵, 筛选, navigation, pathway, route, plan, display, topology, label, indication, icon, start, end, termination, destination, fueling, charge, energy, replenish, along, remain, optimize, matrix

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109269519 A (WELTMEISTER INTELLIGENT TRAVEL TECHNOLOGY (SHANGHAI) CO., LTD.) 25 January 2019 (2019-01-25) description, paragraphs [0005]-[0144], and figures 1-9 | 1-16, 21-25 |
| X | US 2014163877 A1 (HITACHI, LTD.) 12 June 2014 (2014-06-12) description, paragraphs [0008]-[0187], and figures 1-18 | 1-16, 21-25 |
| A | CN 103512580 A (NEC (CHINA) CO., LTD.) 15 January 2014 (2014-01-15) entire document | 1-25 |
| A | CN 110031016 A (TENCENT TECHNOLOGY (SHENZHEN) CO., LTD.) 19 July 2019 (2019-07-19) entire document | 1-25 |
| A | CN 113135100 A (GREAT WALL MOTOR CO., LTD.) 20 July 2021 (2021-07-20) entire document | 1-25 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 December 2023** | **21 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/130008**

### C.   DOCUMENTS CONSIDERED TO BE RELEVANT

| Category* | Citation of document, with indication, where appropriate, of the relevant passages | Relevant to claim No. |
|---|---|---|
| A | CN 114509082 A (VEHICLE OWNER BANG (BEIJING) TECHNOLOGY CO. LTD.) 17 May 2022 (2022-05-17) entire document | 1-25 |

Form PCT/ISA/210 (second sheet) (July 2022)

## INTERNATIONAL SEARCH REPORT
### Information on patent family members

International application No.

**PCT/CN2023/130008**

| Patent document cited in search report | | | Publication date (day/month/year) | Patent family member(s) | | | Publication date (day/month/year) |
|---|---|---|---|---|---|---|---|
| CN | 109269519 | A | 25 January 2019 | None | | | |
| US | 2014163877 | A1 | 12 June 2014 | EP | 2741052 | A1 | 11 June 2014 |
| | | | | EP | 2741052 | B1 | 10 May 2017 |
| | | | | JP | 2014115126 | A | 26 June 2014 |
| | | | | JP | 5928320 | B2 | 01 June 2016 |
| | | | | US | 9170118 | B2 | 27 October 2015 |
| CN | 103512580 | A | 15 January 2014 | JP | 2014006244 | A | 16 January 2014 |
| | | | | US | 2013345976 | A1 | 26 December 2013 |
| CN | 110031016 | A | 19 July 2019 | None | | | |
| CN | 113135100 | A | 20 July 2021 | WO | 2022007689 | A1 | 13 January 2022 |
| CN | 114509082 | A | 17 May 2022 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2023101190286